# EUROPEAN PATENT SPECIFICATION

(11) **EP 1 001 417 B1**
(45) Date of publication and mention of the grant of the patent: **19.10.2005**
(21) Application number: 99301089.1
(22) Date of filing: 15.02.1999
(51) Int. Cl.: G11B 17/04

(54) **Apparatus for driving an optical disc and method thereof**
Gerät und Verfahren zum Antrieb einer optischen Platte
Appareil et procédé d'entrainement d'un disque optique

(30) Priority: 09.11.1998 KR 9847821
(43) Date of publication of application: 17.05.2000
(73) Proprietor: SAMSUNG ELECTRONICS CO., LTD., Suwon-City, Kyungki-do (KR)
(72) Inventor: Ahn, Cheol-woong, Kangnam-gu, Seoul (KR)
(74) Representative: Chugg, David John

(56) References cited:
- EP-A- 0 315 255
- EP-A- 0 518 259
- EP-A- 0 609 617
- EP-A- 0 645 768
- EP-A- 0 855 709
- WO-A-98/14941
- US-A- 5 724 332

## Description

The present invention relates to an apparatus for driving an optical disc, in which an information is recorded and/or reproduced on/from an optical disc by an optical means, and more particularly to an apparatus for driving an optical disc and a method thereof which employs a manual-type disc loading structure.

Generally, an optical disc driving apparatus comprises a deck base, a loading/unloading means, a rotation means, and a recording/reproducing means. The deck base forms a body of the optical disc driving apparatus. The loading/unloading means loads or unloads the optical disc onto/from the deck base. The rotation means rotates the optical disc loaded by the loading/unloading means. The recording/reproducing means records and/or reproduces an information on/from the optical disc, while travelling in radial direction of the optical disc which is rotated by the rotation means. Here, the optical disc may be loaded or unloaded while mounted on a tray. There are various types of optical disc driving apparatuses such as one having the optical disc received into a caddy or a cartridge to be inserted or withdrawn into/from the deck base, or the like. A spindle motor is generally used as the rotation means, and a pickup unit is used as the recording/reproducing means.

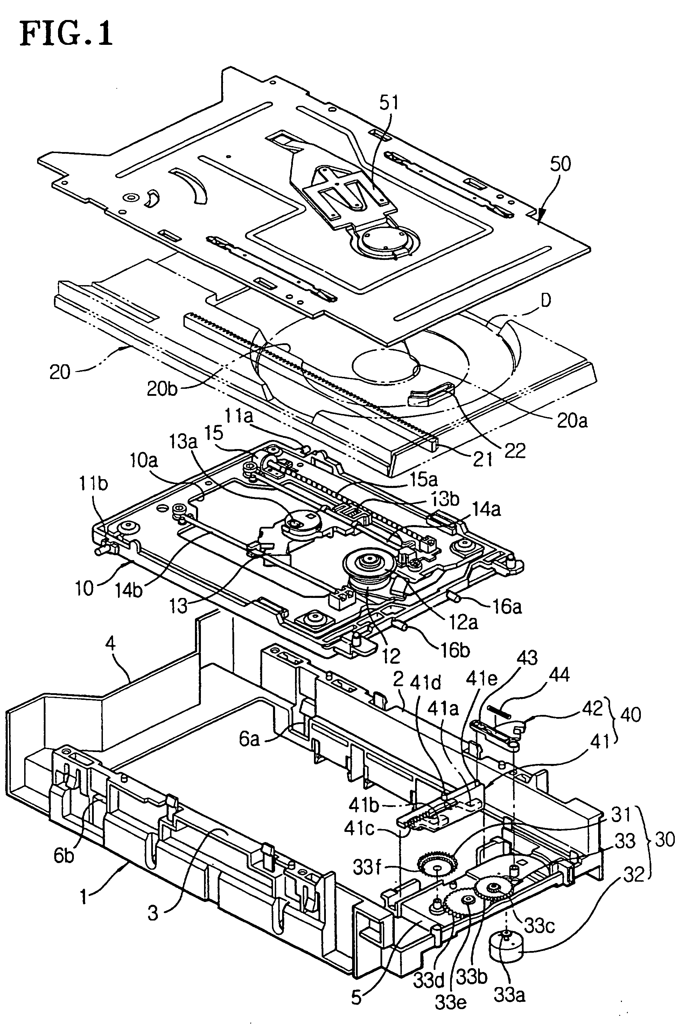

Figure 1 shows a conventional tray-type optical disc driving apparatus. As shown in Figure 1, the optical disc driving apparatus comprises a deck base 1, a base plate 10 on which the spindle motor and pickup unit are mounted, a tray 20 on which an optical disc D is mounted, a tray moving means 30, a base plate raising and lowering means 40, and an upper cover 50.

The deck base 1 is provided with a pair of sidewalls 2 and 3, a rear wall 4, and a front bottom 5 which has a predetermined width. A pair of holes 6a and 6b are defined at a rear portion of the sidewalls 2 and 3.

The base plate 10 has a pair of hinge projections 11a and 11b formed at both rear ends thereof. The base plate 10 is movably mounted on the deck base 1 by the hinge projections 11a and 11b which are respectively inserted into the holes 6a and 6b of the deck base 1. A spindle motor 12 and a pickup unit 13 are mounted on the base plate 10. The spindle motor 12 has a turntable 12a onto which a disc D is positioned. The pickup unit 13 has an optical head 13a. The spindle motor 12 is attached adjacent to a longitudinal opening 10a of the base plate 10, and the pickup unit 13 is movably disposed at a pair of guiding shafts 14a and 14b which lie across the longitudinal opening 10a in parallel relation to each other. Additionally, a stepping motor 15 is installed at a side of the base plate 10, and a lead screw 15a is installed at the stepping motor 15 in parallel relation to the guiding shafts 14a and 14b. The lead screw 15a is engaged with a guiding holder 13b which is formed at a side of the pickup unit 13. Accordingly, when the stepping motor 15 is rotated in one direction and reverse direction thereof, the pickup unit 13 is moved along the guiding shafts 14a and 14b.

The tray 20 is disposed on an upper side of the deck base 1 capable of being inserted and withdrawn with respect to the deck base 1. A receiving opening 20a is defined approximately at the middle portion of the tray 20 to receive the spindle motor 12, and a longitudinal opening 20b is so designed as to intercommunicate with the receiving hole 20a and to expose the recordable surface of the optical disc D mounted on the tray 20 to the pickup unit 13. Additionally, a rack gear 21 is disposed on a lower surface of the tray 20 in a lengthwise direction of the tray 20, and an operation member 22 having a cam groove is disposed adjacent to the receiving opening 20a.

The tray moving means 30 is provided on the bottom 5 of the deck base 1, and the base plate raising and lowering means 40 is such constructed to operate together with the tray moving means 30.

The tray moving means 30 is provided with the rack gear 21 disposed on the tray 20, a pinion 31, and a motor 32 which generates a driving force. The pinion 31 is rotatably disposed on the bottom of the deck base 1 by a shaft. The motor 32 is disposed on a lower surface of the bottom 5 of the deck base 1 and a driving shaft of the motor 32 is protruded upward through the bottom 5 of the deck base 1. The driving force of the motor 32 is transmitted to the pinion 31 via gear train 33. The gear train 33 has a first gear 33a fixed to the driving shaft of the motor 32, a second gear 33b engaged with the first gear 33a, a third gear 33c integrally formed with the second gear 33b, a fourth gear 33d engaged with the third gear 33c, a fifth gear 33e integrally formed with the fourth gear 33d, and a sixth gear 33f integrally formed with the pinion 31 to be engaged with the fifth gear 33e. Here, when the motor 32 is rotated in the clockwise direction, the tray 20 is advanced so as to be inserted into the deck base 1. When the motor 32 is rotated in the counterclockwise direction, the tray 20 is retracted so as to be withdrawn from the deck base 1.

The base plate raising and lowering means 40 has a slide member 41 and a pivot lever 42. The slide member 41 is disposed in an inner side of the bottom 5 of the deck base 1 so as to be moved in perpendicular relation to the direction which the tray 20 is moved toward. The pivot lever 42 is disposed on the bottom 5 of the deck base 1 by a shaft, while connected to an end of the slide member 41.

A pair of cam grooves 41a and 41b are defined at a side surface of the slide member 41. A pair of operation projections 16a and 16b are projected from the front surface of the base plate 10 while being spaced from each other at a predetermined distance. The operation projections 16a and 16b are inserted into the cam grooves 41a and 41b. Additionally, a rack 41c is formed at the other side of the slide member 41. The rack 41c is selectively engaged with the sixth gear 33f of the gear train 33. Accordingly, when the sixth gear 33f is rotated in one direction and the reverse direction thereof, the slide member 41 is moved. Initially, when the tray 20 is not inserted into the deck base 1, the rack 41c is not engaged with the sixth gear 33f but spaced therefrom at a predetermined distance.

Further, a projection 41d is formed on an upper portion of the slide member 41. When the tray 20 is inserted into the deck base 1, the projection 41d is inserted into the cam groove of the operation member 22 which is formed on the tray 20. By the projection 41d inserted into the cam groove of the operation member 22, the slide member 41 is slightly moved when the tray 20 is inserted. Accordingly, the rack 41c of the slide member 41 is engaged with the sixth gear 33f, and as the sixth gear 33f is rotated, the slide member 41 is continuously moved. By the slide member 41 which is moved, the operation projections 16a and 16b of the base plate 10, which are positioned at a lower portion of the cam grooves 41a and 41b, are raised along the inclined surfaces of the cam grooves 41a and 41b to be positioned at the upper ends of the cam grooves 41a and 41b. By the rising motion of the base plate 10, the optical disc D mounted on the tray 20 is put on the turntable 12a of the spindle motor 12 to be rotated by the turntable 12a.

Meanwhile, the pivot lever 42 has a slider 43 which is inserted into a boss 41e of the slide member 41. The slider 43 is accommodated at an opening of the pivot lever 42. A spring 44 for elastically supporting the slider 43 is disposed in the opening. Due to the presence of the slider 43 and the spring 44, the slide member 41 maintains its initial state, in which the rack 41c and the sixth gear 33f are spaced from each other.

A clamp assembly 51 is provided on the cover 50, to be moved in response to inserting the tray 20, and to press against the hub of the optical disc D.

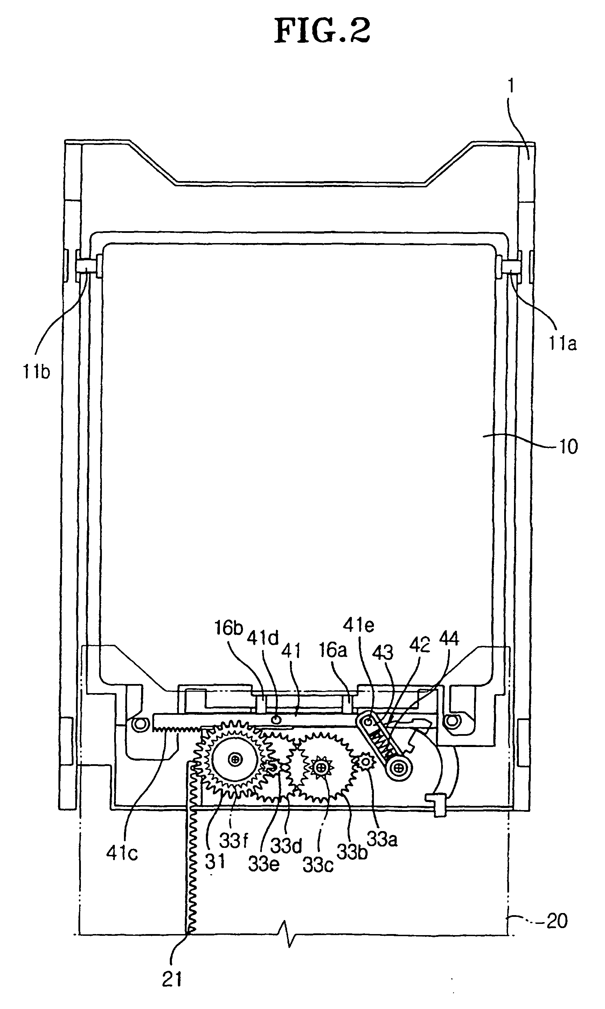

Hereinafter, the operation of the conventional tray-type optical disc driving apparatus will be described with reference to FIGs. 2 to 5 accompanied.

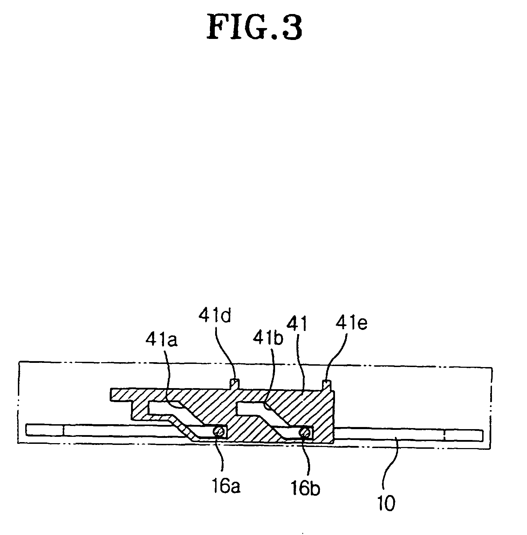

Figure 2 is a plan view of the deck base 1 showing the state when the disc is unloaded, that is, the tray is withdrawn from the deck base 1, and Figure 3 is a sectional view of Figure 2 for showing the position of the base plate 10 when the tray is withdrawn.

As shown in Figure 2, the tray 20 is completely withdrawn out of the deck base 1, and the slide member 41 is moved leftward. The rack 41c of the slide member 41 and the sixth gear 33f of the gear train 33 are spaced from each other, and the operation projections 16a and 16b of the base plate 10 are positioned at the lower ends of the cam grooves 41a and 41b of the slide member 41. Thus, the base plate 10 is in a lowered position.

Then, when the tray 20 on which the optical disc D is mounted is manually pushed or when a separate loading switch is pushed, the loading motor 32 is driven so that the tray 20 is advanced. Accordingly, the tray 20 is inserted into the deck base 1.

When the tray 20 is almost inserted into the deck base 1, and more specifically when the operation member 22 of the tray 20 and the projection 41d of the slide member 41 are so placed as to be in contact with each other, the projection 41d is inserted into the cam groove of the operation member 22 to move the slide member 41 toward the right side of Figure 2. Accordingly, the rack 41c of the slide member 41 and the sixth gear 33f of the gear train 33 are engaged with each other, and the slide member 41 is further moved rightward along with the tray 20 which is advanced. Continuously, the operation projections 16a and 16b of the base plate 10 positioned at the lower ends of the cam grooves 41a and 41b of the slide member 41 are moved along the inclined surfaces of the cam grooves 41a and 41b to be positioned at the upper ends of the cam grooves 41a and 41b so that the base plate 10 is raised.

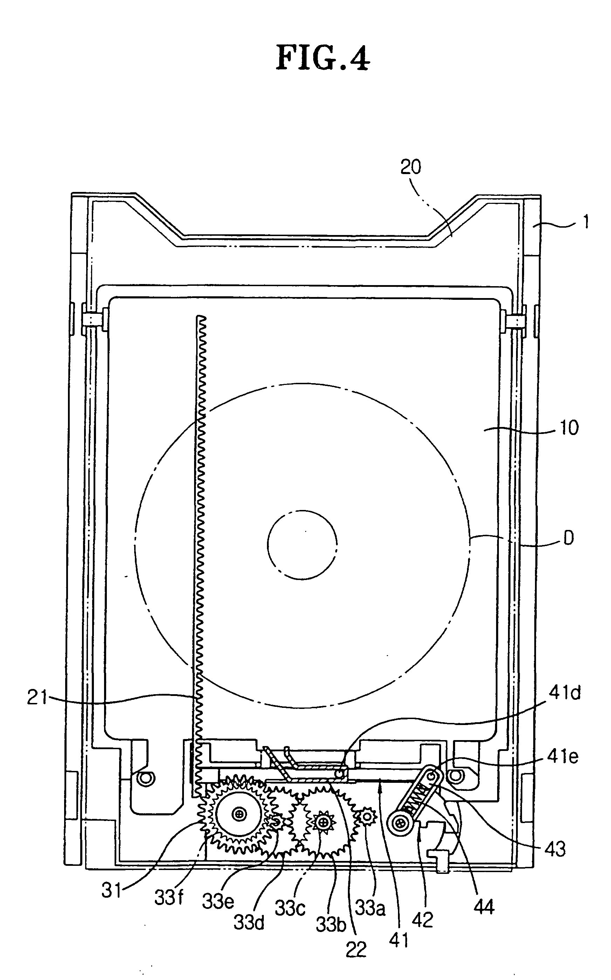

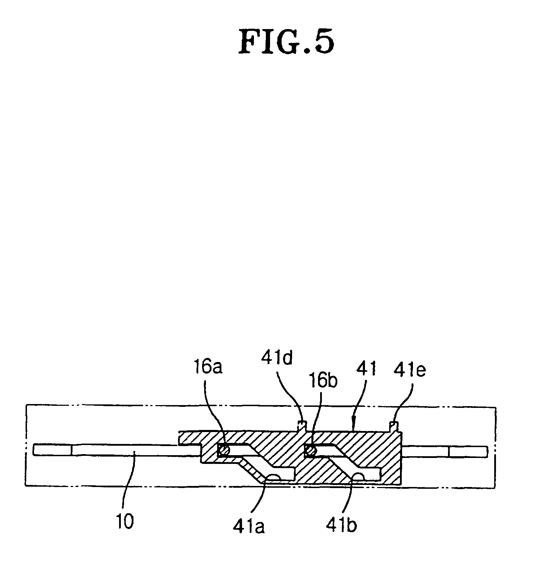

FIGs. 4 and 5 are a plan view and a sectional view of the deck base 1 showing the state when the tray 20 is inserted in the deck base 1, that is, the disc is loaded in the deck base 1.

As shown, the tray 20 is inserted into the deck base 1, and the slide member 41 is on the right side of Figure 4. Further, the operation projections 16a and 16b of the base plate 10 are positioned at the upper ends of the cam grooves 41a and 41b of the slide member 41 so that the base plate 10 is maintained in a raised position.

By the rising motion of the base plate 10, the optical disc D mounted on the tray 20 is chucked on the turntable 12a of the spindle motor 12, while simultaneously clamped by the clamp assembly 51 of the cover 50. In such a situation, the spindle motor 32 is driven so that the optical disc D is rotated at a predetermined speed. Further, by the stepping motor 15 which is driven, the pickup unit 13 is moved in a radial direction of the optical disc D and records/reproduces information on/from the optical disc D.

Meanwhile, when the eject button is pushed to withdraw the optical disc D whose information recording/reproducing is completed, the loading motor 32 is driven in the reverse direction so that the tray 20 is withdrawn. Simultaneously, the slide member 41 which is engaged with the sixth gear 33f of the gear train 33 is moved toward a left side of Figure 4. Accordingly, the operation projections 16a and 16b of the base plate 10 inserted into the cam grooves 41a and 41b of the slide member 41 are moved along the inclined surface of the cam grooves 41a and 41b to be positioned at the lower ends of the cam grooves 41a and 41b so that the base plate 10 is lowered. Also, the tray 20 is completely withdrawn from the deck base 1. Then, after the optical disc D is replaced, if the separate loading switch is pushed or the tray 20 is manually pushed, the tray 20 is inserted into the deck base 1 according to the disc loading processes as described above.

The conventional optical disc driving apparatus, however, has a drawback in that it has structures for loading or unloading the optical disc D and for raising and lowering the base plate 10 using the loading motor, thereby requiring many parts and resulting in a complex structure of the product.

Since many parts are required for the conventional optical disc driving apparatus, the manufacturing cost and process are increased.

Also, since many parts are required, the product cannot have smaller size.

The present invention has been made with a view to overcome or reduce to an extent the above-mentioned problems, and accordingly, it is a first aim of preferred embodiments of the present invention to provide an optical disc driving apparatus employing a manual-type disc loading structure instead of using the loading motor, by which the number of parts is reduced, structure is simplified, and the product price can be less.

Another aim of embodiments of the present invention is to provide an optical disc driving apparatus having relatively few parts, which results in much smaller product.

A further aim of embodiments of the present invention is to provide an optical disc driving apparatus capable of being utilized as a caddy-type as well as a tray-type.

Another aim of embodiments of the present invention is to provide a method for driving an optical disc for performing manual-type disc loading/unloading processes without using a loading motor.

Yet another aim of embodiments of the present invention is to provide a method for driving an optical disc, by selecting one of the caddy-type optical disc or tray-type optical disc, respectively.

EP-A-0 518 259 discloses an apparatus for carrying out recording and/or reproducing signals for disk-shaped recording mediums, wherein a mechanical chassis supporting a spindle motor is upwards and downwards moveable by a motor. This document forms the pre-characterising portion of the claims appended hereto.

According to the present invention there is provided an apparatus and method as set forth in the appended claims. Preferred features of the invention will be apparent from the dependent claims, and the description which follows.

According to a first aspect of the invention, there is provided an apparatus for driving an optical disc employing a caddy, wherein the optical disc driving apparatus comprises: a means for guiding the movement of a base plate, on which an optical disc rotation means and an optical device are mounted, to an optical disc loading and chucking position; and an ejection means; characterised in that: the means for guiding movement of the base plate (200), guides the base plate while the base plate is moved by physical force exerted to a caddy inserted into a deck base; and the apparatus comprises a means for locking the base plate following movement to the optical disc loading and chucking position by the guiding means.

According to a second aspect of the invention, there is provided a method for driving an optical disc comprising steps of: (A) loading an optical disc, wherein a base plate on which a spindle motor and a pickup unit are mounted is moved to an optical disc loading and chucking position; (C) recording and/or reproducing an information by means of the spindle motor and the pickup unit; and (D) unloading the optical disc; characterised by: in step (A) the base plate is moved to the optical disc loading and chucking position by physical force exerted to a caddy inserted into a deck base; (B) locking the base plate which is moved to the optical disc loading and chucking position; in step (D) the pickup unit is rapidly moved in a radial direction of the optical disc so as to unlock the base plate and to move the base plate to the initial position.

For a better understanding of the invention, and to show how embodiments of the same may be carried into effect, reference will now be made, by way of example, to the accompanying diagrammatic drawings, in which:
Figure 1 is an exploded perspective view showing a conventional optical disc driving apparatus;
Figure 2 is a plan view showing a conventional optical disc driving apparatus from which a tray is withdrawn;
Figure 3 is a sectional view showing a position of a base plate wherein a tray is withdrawn as shown in Figure 2;
Figure 4 is a plan view showing a conventional optical disc driving apparatus to which a tray is inserted;
Figure 5 is a sectional view showing a position of the base plate wherein a tray is inserted as shown in Figure 4;
Figure 6 is a perspective view showing the optical disc driving apparatus of an embodiment of the present invention wherein a disc is unloaded;
Figure 7 is a perspective view showing the optical disc driving apparatus of Figure 6 wherein a disc is loaded;
Figure 8 is an exploded perspective view showing the main section of an optical disc driving apparatus of Figure 6 and 7;
Figure 9 is a bottom perspective view showing a type of caddy as may be employed in embodiments of the present invention;
Figure 10 is a detailed view for showing the structure and operation of unlocking means of the base plate of the optical disc driving apparatus;
Figure 11 is a detailed view for showing the structure and operation of the emergency ejection means of the optical disc driving apparatus;
Figure 12 is a detailed view for showing the structure and operation of the caddy holding means of an optical disc driving apparatus according to embodiments of the present invention;
FIGs. 13 and 14 are operational diagrams of a base plate which is moved in response to loading/unloading a disc in the optical disc driving apparatus, wherein Figure 13 shows a state in which the caddy is not yet inserted, and Figure 14 shows a state in which the caddy is inserted;
Figure 15 is a flow chart for explaining the method for driving an optical disc according to one preferred embodiment of the present invention;
Figure 16 is a flow chart for explaining the method for driving an optical disc according to another preferred embodiment of the present invention; and
Figure 17 is a flow chart for explaining the method for driving an optical disc according to yet another preferred embodiment of the present invention.

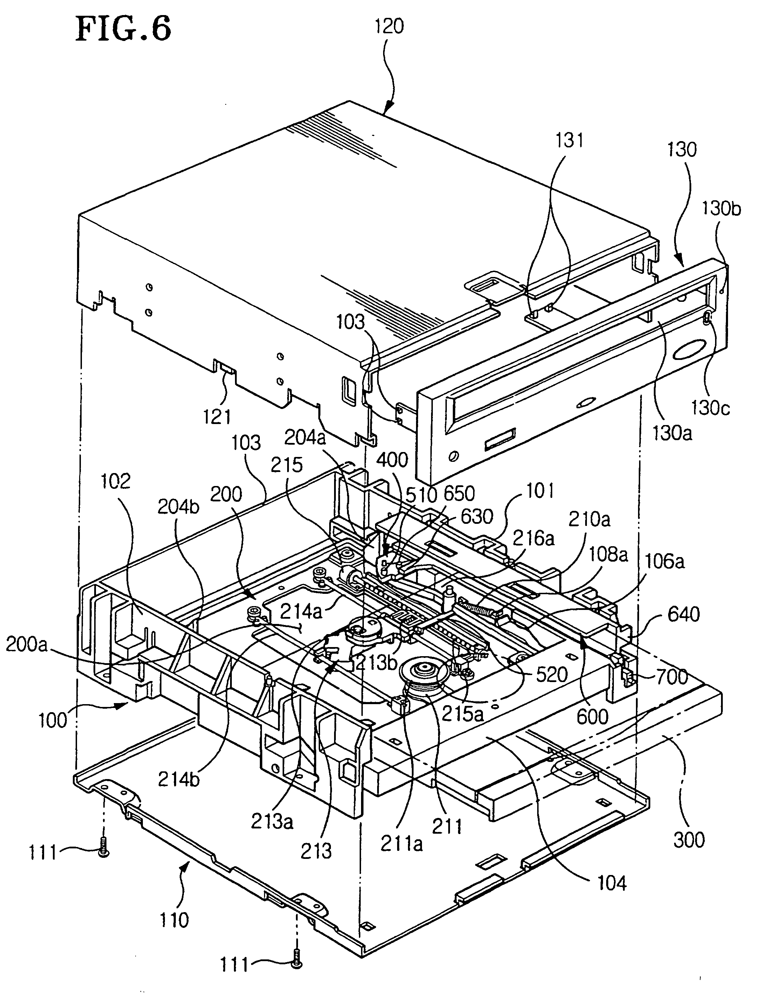

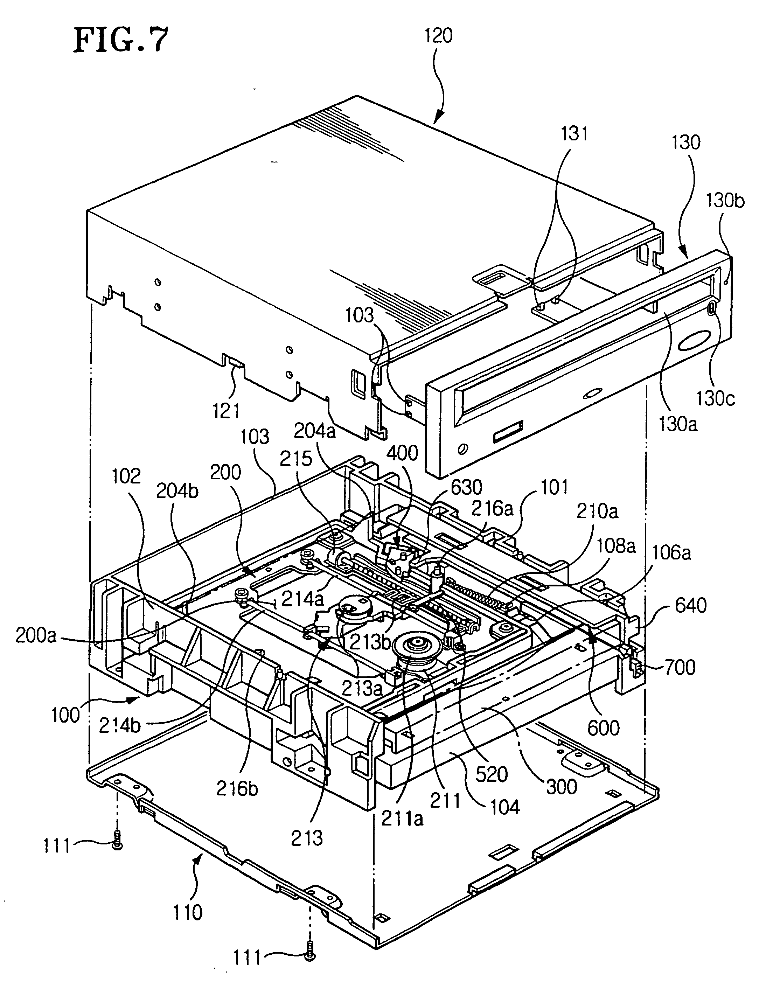

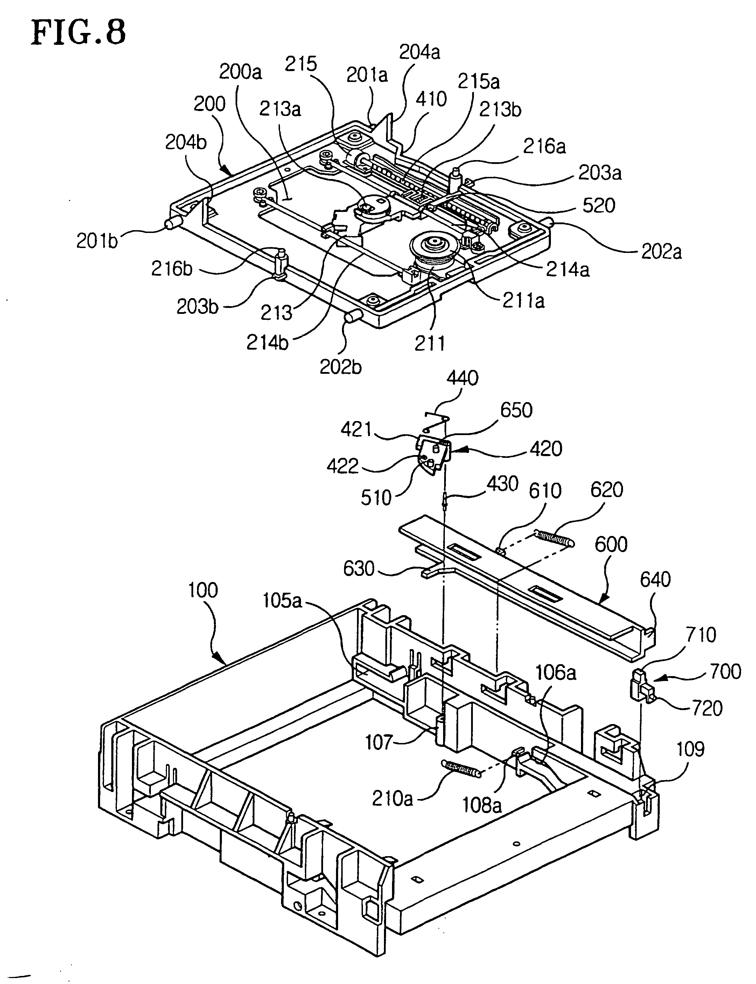

Figure 6 shows an optical disc driving apparatus according to one preferred embodiment of the present invention wherein a caddy is withdrawn and an optical disc is unloaded. Figure 7 shows the state that the caddy is inserted, that is, the optical disc is loaded. Further, Figure 8 shows the main section of optical disc driving apparatus according to one preferred embodiment of the present invention.

Reference numeral 100 in the drawings designates a deck base, 200 is a base plate, and 300 is a caddy.

As shown in the Figures, the deck base 100 has both sidewalls 101 and 102 so arranged to face each other, a rear wall 103, and a bottom 104 which has a predetermined width. A plate 110 is coupled to a lower portion of the deck base 100, while a cover 120 is coupled to an upper portion of the deck base 100. A front panel 130 having a caddy entrance 130a is coupled to a front portion of the deck base 100. The lower plate 110 is fixed to the deck base 100 by a plurality of screws 111, the upper cover 120 is coupled to the lower plate 110 by a hook assembly 121, and the front panel 130 is coupled to the front surface of the upper cover 120 by a hook assembly 131.

A pair of sliding holes, or slots, 105a are defined at both sidewalls 101 and 102 of the deck base 100, while facing each other. (Albeit not shown, another sliding hole 105a is defined at the other sidewall 102 of the deck base 100, having an identical structure with the sliding hole 105a of the sidewall 101.) Additionally, a pair of cam grooves 106a are defined at front portions of sidewalls 101 and 102 of the deck base 100, while facing each other. (Albeit not shown, another cam groove 106a is also defined at the other sidewall 102 of the deck base 100.) A reference numeral 107 designates a boss, and 108a is a spring holding projection. Further, 130b designates an emergency ejection hole, and 130c is a movement hole.

The base plate 200 is provided with two pairs of holding projections 201a, 201b, 202a, and 202b, and is movably disposed between both sidewalls 101 and 102 of the deck base 100. The first holding projections 201a and 201b act as first guiding projections and are inserted into the sliding holes (slots) 105a of the deck base 100, and the second holding projections 202a and 202b act as a second pair of guiding projections and are inserted into the cam grooves 106a of the deck base 100, whereby the base plate 200 is slidably mounted to the deck base 100. The base plate 200 which is slidably mounted to the deck base 100 is raised and lowered to a predetermined degree by the cam grooves 106a of the deck base 100 when the base plate 200 is moved. Additionally, the base plate 200 is elastically supported toward the front portion of the deck base 100 by elastic means such as a pair of springs 210a disposed, respectively, between a pair of first spring holding projections 108a and a pair of second spring holding projections 203a and 203b (One of the springs 210a is shown in FIGs. 6, 7, and 8, and the other spring 210a, which is not shown, is disposed opposite thereto). The first spring holding projections 108a are formed at both sidewalls 101 and 102 of the deck base 100, and a pair of second spring holding projections 203a and 203b are formed at both sides of the base plate 200. Further, a pair of locking projections 204a and 204b are formed at the rear portion of the base plate 200. The locking projections 204a and 204b contact with the rear end of the caddy 300 which is inserted into the deck base 100. Accordingly, when the rear end of the caddy 300, which is inserted into the deck base 100, is contacted with the locking projections 204a and 204b of the base plate 200, the base plate 200 begins to be advanced toward the rear portion of the deck base 100 along with the caddy 300. In such a situation, the base plate 200 is raised to a predetermined degree by the cam grooves 106a to be locked with a locking means 400 and be positioned thereat. The locking means 400 will be described later.

Meanwhile, a longitudinal opening 200a is defined at the base plate 200, and a spindle motor 211 having a turntable 211a is mounted on the front portion of the base plate 200 adjacent to the longitudinal opening. An optical disc D which is mounted on a caddy 300 to be loaded is chucked with respect to the turntable 211a. A pickup unit 213 is movably disposed at a pair of guiding shafts 214a and 214b which lie across the longitudinal opening 200a in parallel relation to each other. The pickup unit 213 has an optical head 213a. A guiding holder 213b extends from a side of the pickup unit 213. The guiding holder 213b is engaged with a lead screw 215a connected to the stepping motor 215. Accordingly, when the stepping motor 215 is driven, the pickup unit 213 travels along the guiding shafts 214a and 214b.

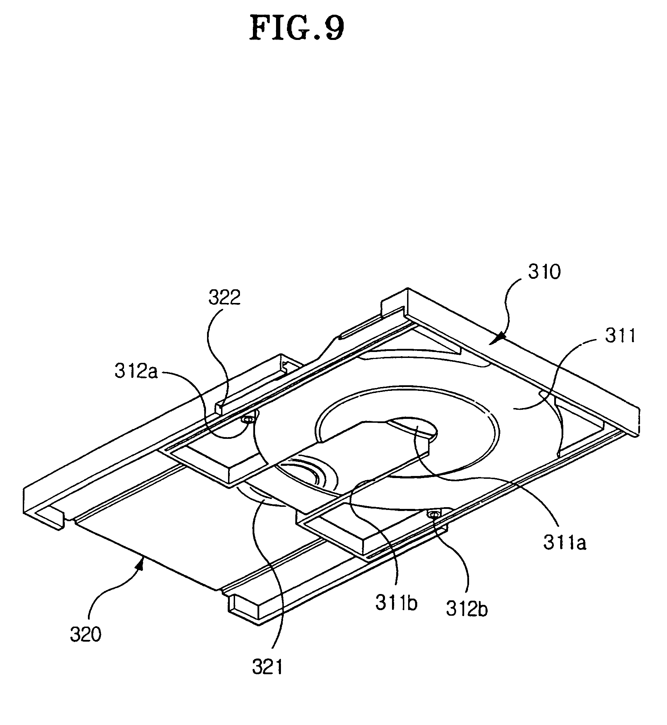

As shown in Figure 9, the caddy 300 is provided with a caddy tray 310 and a caddy cover 320. The caddy tray 310 is slidably coupled to the caddy cover 320. A disc loading section 311 is provided on the caddy tray 310. A receiving opening 311a is defined at the middle portion of the disc loading section 311 to receive the spindle motor 211. A longitudinal opening 311b is designed to intercommunicate with the receiving opening 311a to serve as a travel path for the pickup unit 213. Further, a pair of bosses 312a and 312b having holes for preventing separation are disposed on both lower sides of the caddy tray 310. A pair of projections 216a and 216b for preventing separation are projected approximately from the middle portions of the base plate 200 and inserted into the separation preventing holes of the bosses 312a and 312b. Consequently, the caddy 300 which is inserted into the deck base 100 and thus moved to a loading position is not separated therefrom while moving. A clamper 321 is disposed at the middle portion of the caddy cover 320. Additionally, a locking elevation 322 is formed at a lower side of the caddy cover 320. The locking elevation 322 may be formed either at both sides of the caddy cover 320, or at one side of the caddy cover 320. Function of the locking elevation 322 will be described later.

The locking means 400 comprises a locking formation such as a locking hole or locking groove 410 defined at a side of the base plate 200, and a locker 420. The locker 420 has a locking lever 421 selectively inserted into the locking groove 410, and a locking piece 422. The locker 420 is pivotally coupled to a boss 107 formed at a sidewall 101 of the deck base 100 by a pin 430. The locker 420 which is coupled with the boss 107 is elastically supported by a biasing means such as spring 440 in a counterclockwise direction. Initially, when the base plate 200 is in a retracted position, the locking lever 421 of the locker 420 is separated from the locking groove 410 of the base plate 200. Then, when the base plate 200 is advanced and the locking groove 410 reaches to the locking lever 421, the locker 420 is rotated in a counterclockwise direction by a retraction force of the spring 440 and the locking lever 421 is inserted into the locking groove 410 so that the base plate 200 is locked.

The base plate 200 which is locked by the locking means 400 is unlocked by a unlocking means 500 which is operated in an ejection mode, and the base plate 200 is returned to its initial position by springs 210a disposed at both sides thereof.

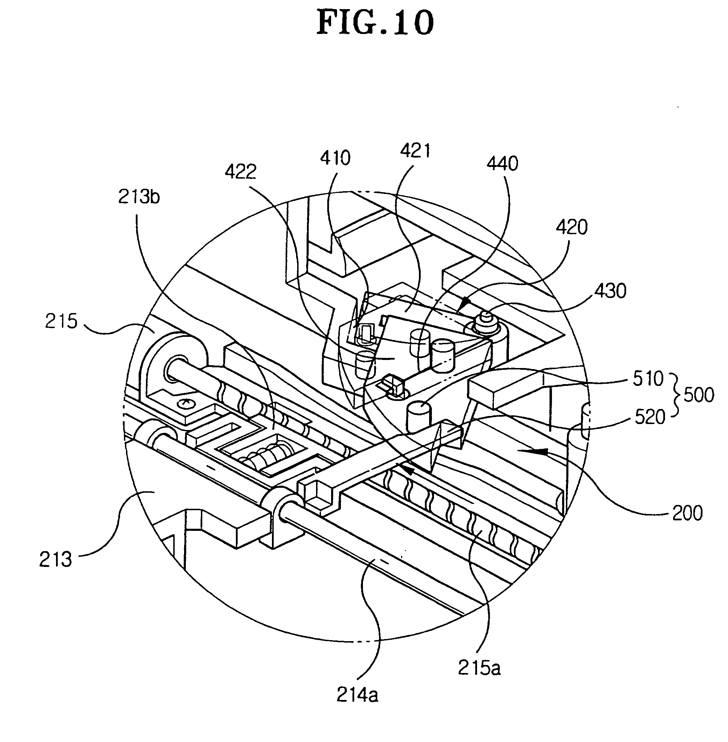

As shown in Figure 10, the unlocking means 500 is provided with a first unlocking projection 510 formed on the locking piece 422 of the locker 420, and a first unlocking lever 520 extending from the pickup unit 213 to be selectively in contact with the first unlocking projection 510. The pickup unit 213 is rapidly moved in a circumferential direction of the optical disc D in the ejection mode. Therefore, the first unlocking lever 520 pushes the first unlocking projection 510 on the locking piece 422 so that the locker 420 is rotated in a clockwise direction. Accordingly, as shown in Figure 10, the locker 420 shown in a solid line is rotated by the first unlocking lever 520 to the position shown in a two-dot chain line, and the locking lever 421 is separated from the locking groove 410 of the base plate 200.

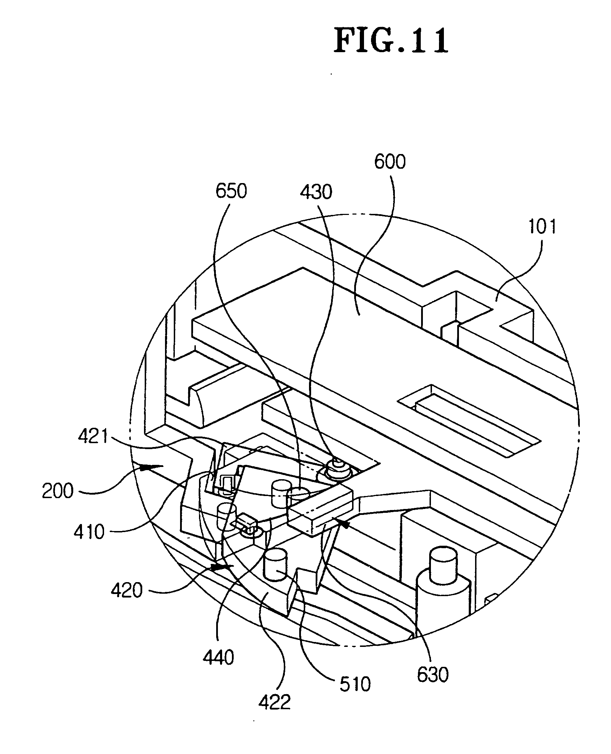

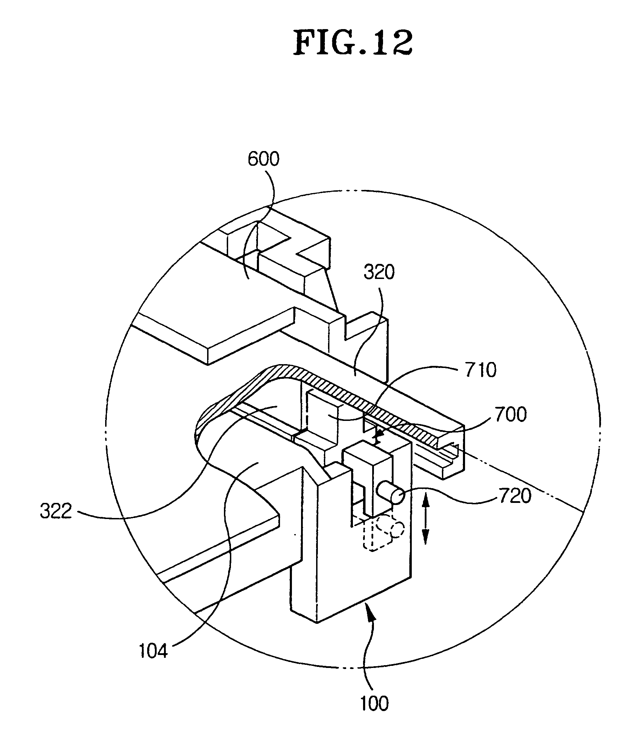

Meanwhile, a reference numeral 600 in FIGs. 11 and 12 designates a guiding slider. The guiding slider 600 is disposed at the inner side of the sidewall 101 of the deck base 100 to guide the movement of the caddy 300 which is inserted/withdrawn into/from the deck base 100. The guiding slider 600 is advanced/retracted in a range of a predetermined stroke, and is elastically supported toward the front portion of the deck base 100 by an elastic means in the form of a spring 620 which is disposed between the spring holding projection 610 of guiding slider 600 and holding projections (not shown) of the sidewall 101 of the deck base 100. Further, a second unlocking lever 630 extends from a side of the guiding slider 600, while a press member in the form of a bent press part 640 is formed at the other side of the guiding slider 600.

The second unlocking lever 630, the press part 640, and the second unlocking projection 650 formed at the locking piece 422 of the locker 420 constitute an emergency ejection means. Here, the press part 640 is exposed outward through an emergency ejection hole 130b which is defined at the front panel 130. Accordingly, users may press the press part 640 of the guiding slider 600 with a pointed means (not shown) through the emergency ejection hole 130b from the outside. When the press part 640 is pressed by a pointed means, the guiding slider 600 is advanced within its predetermined stroke, and the second unlocking lever 630 pushes the second unlocking projection 650 of the locker 420. Accordingly as shown in Figure 11, the locker 420 is rotated as shown in a double-dot chain line, and the locking lever 421 of the locker 420 is separated from the locking groove 410 of the base plate 200 so that the base plate 200 is unlocked. Such an emergency ejection means helps to forcibly withdraw the caddy when the optical disc driving apparatus stops operating due to an abnormality, etc.

Further, according to the embodiment shown, the optical disc driving apparatus has a caddy holding means for holding the cover 320 of the caddy 300 which is withdrawn when the disc is ejected by the unlocking means of the emergency ejection means, thereby exclusively withdrawing the caddy tray 310. Therefore, the optical disc driving apparatus of the present invention can be used in a caddy type as well as a tray type.

The caddy holding means has a holder 700, and a locking elevation 322. The holder 700 is disposed at a front side of the deck base 100. The holder 700 is upwardly and downwardly movable. The locking elevation 322 is formed at the caddy cover 320.

A locking protrusion 710 is formed at an upper portion of the holder 700, and a movement projection 720 is formed at a front portion of the holder 700. The movement projection 720 is projected through a moving hole 130c which is defined at the front panel 130. When the holder 700 is moved upward, as shown in Figure 12, the locking protrusion 710 is raised higher than the bottom 104 of the deck base 100. Consequently, the locking elevation 322 of the caddy cover 320 is locked with the locking protrusion 710, while the caddy 300 is withdrawn, so that the caddy cover 320 is not withdrawn outward. Then, when the caddy tray 310 is pulled, the caddy tray 310 is slid from the caddy cover 320 to be withdrawn outward. Thus, the optical disc D is easily withdrawn from the caddy tray 310 which is withdrawn as described above. Also, the replacement and loading of the optical disc D are conveniently performed.

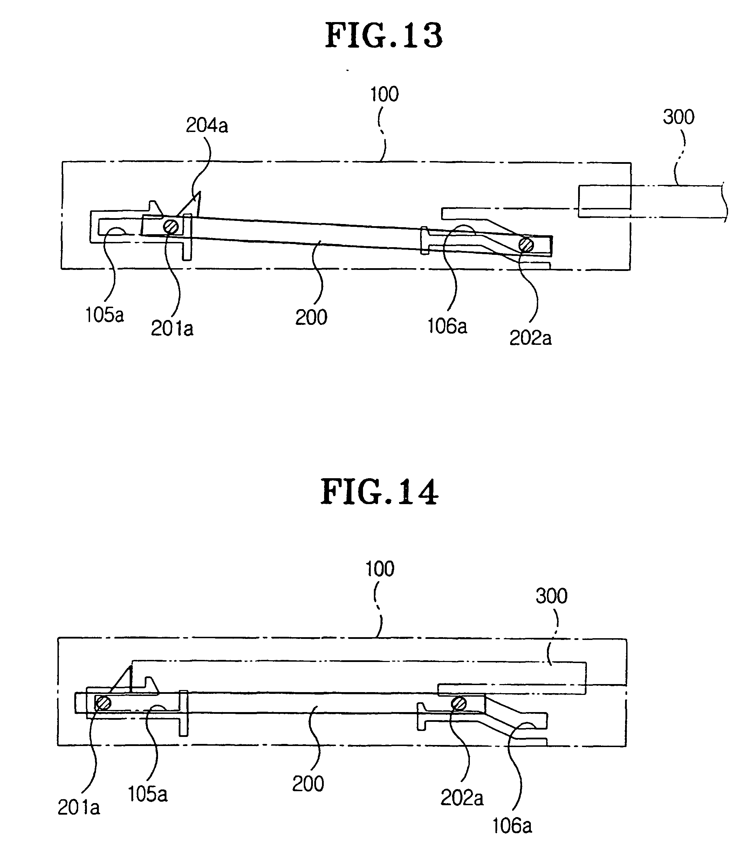

Hereinafter, a method for driving the optical disc according to one preferred embodiment of the present invention will be described with respect to FIGs. 13, 14, and 15.

First, in the initial state which is shown in Figure 13, the caddy 300 is pushed into the deck base 100 by physical force (Step 61). Then, as the rear end of the caddy 300 is contacted with the locking projection 204a of the base plate 200, the base plate 200 is advanced with the caddy 300 and is locked by the locking means at a predetermined position (Step 62). Figure 14 shows the optical disc D loaded and chucked. In this situation, the information is recorded and/or reproduced by a predetermined signal applied from outside (Step 63).

When the signal for ejection is applied in Step 63 and recognised as such (Step 64), the pickup unit is moved in a circumferential direction of the optical disc D (Step 65). Accordingly, the unlocking lever of the pickup unit is contacted with the unlocking projection of the locker, thereby unlocking the base plate 200 (Step 66). Consequently, the base plate 200 is returned to its initial position by a retraction force of the spring, and the caddy 300 is withdrawn outward (Step 67). Then, the user determines whether to proceed with the operation or not (Step 68). If the user determines to proceed with the operation, he replaces the optical disc D with a new one and inserts the new disc D (Step 69) for loading.

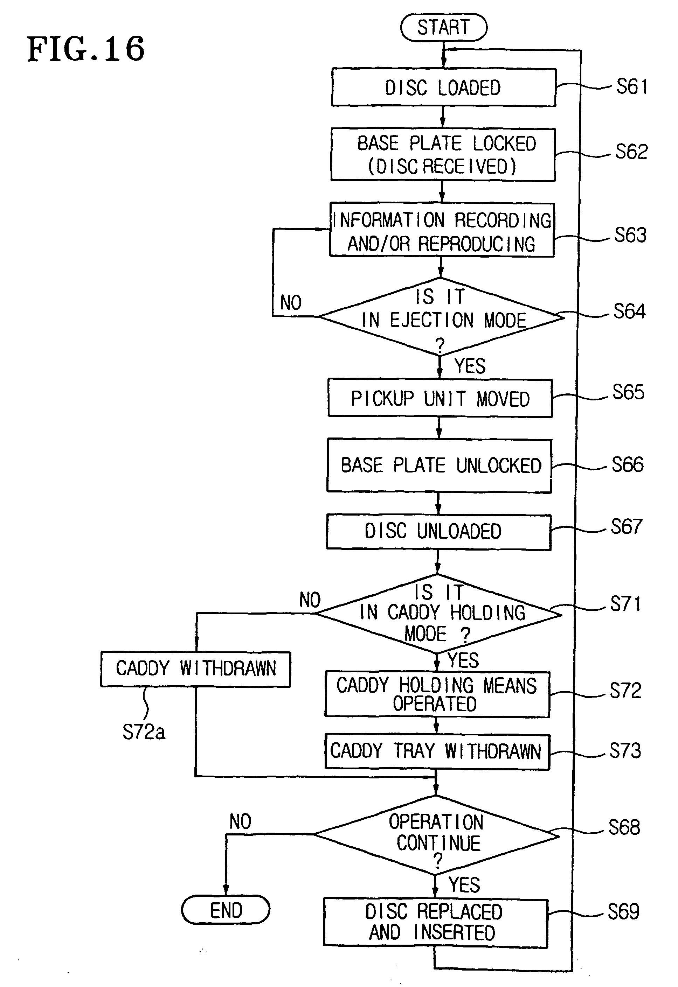

The method for driving a caddy-type optical disc has been described as above. Further, the present invention offers a method for driving a tray-type optical disc which is shown in Figure 16.

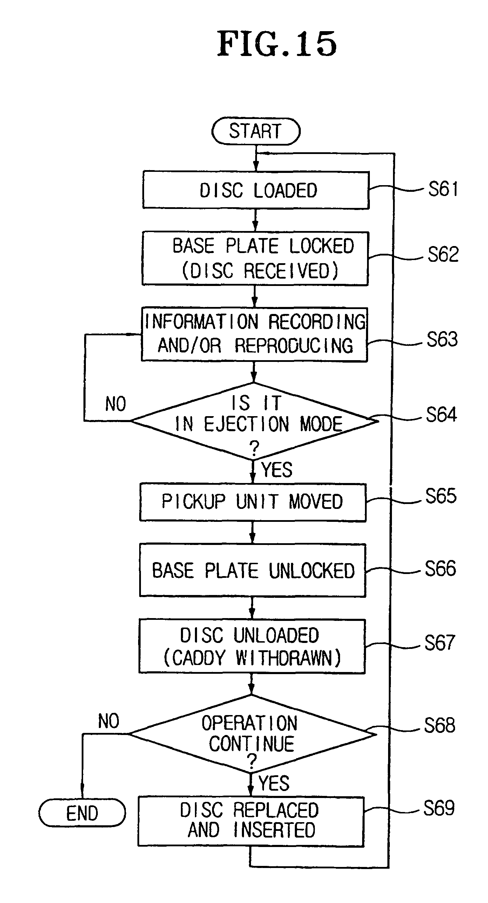

As shown in Figure 16, according to the method for driving the tray-type optical disc, first, it is determined whether it is in the caddy holding mode or not (Step 71). When it is determined as a caddy holding mode, then the caddy holding means is operated (Step 72). If not, the caddy 300 is withdrawn (Step 72a') The user may use the caddy holding means at his will. When the caddy holding means is operated, the caddy tray is withdrawn outward but not the caddy cover (Step 73). Since the other steps are identical with those of the method for driving the caddy-type optical disc described above with respect to Figure 15, like steps will be given the same reference numerals and further description will be omitted.

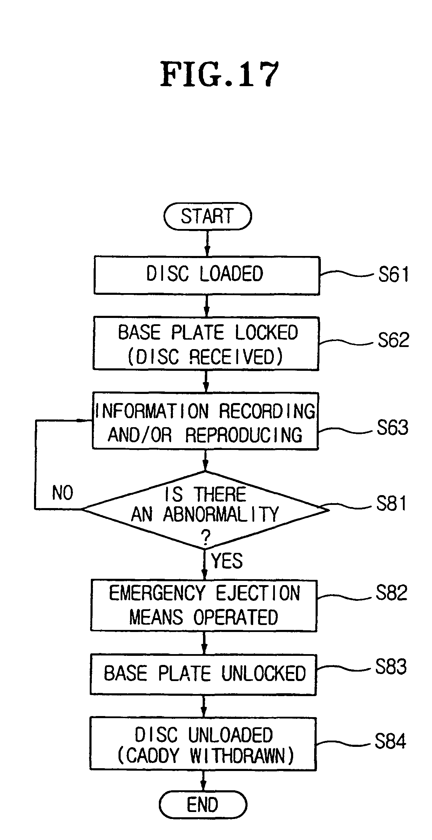

Figure 17 is a flow chart for explaining a method for driving the optical disc according to the second preferred embodiment of the present invention, wherein the method for emergency ejection is shown.

The emergency ejection is to protect the optical disc driving apparatus as well as the optical disc by forcibly withdrawing the caddy when the optical disc driving apparatus stops operating due to an abnormality, or the like during information recording and/or reproducing.

As shown in Figure 17, when the operation of the optical disc driving apparatus is stopped while the information is recorded and/or reproduced (Step 81), it is detected so that the emergency ejection means is operated (Step 82). Then, the emergency ejection means unlocks the base plate (Step 83) so that the caddy is withdrawn (Step 84). Accordingly, even when the optical disc driving apparatus is stopped by an abnormal cause, the disc is not left in the deck base, therefore, possible damage to the disc and to the optical disc driving apparatus is prevented.

As described above, in embodiments of the optical disc driving apparatus of the present invention, since the manual type disc loading structure is employed instead of the loading motor, parts required therefor are reduced. Accordingly, the product has a simpler structure, and requires fewer manufacturing processes and costs are decreased, so that the price can be considerably less.

Further, in embodiments of the optical disc driving apparatus of the present invention, since the loading motor, the gear train structure, or the like are not employed, less space is required so that the parts of the optical disc driving apparatus can be efficiently arranged and the product can be made much smaller.

Still further, since the optical disc driving apparatus of the present invention can be used as the caddy-type as well as the tray-type, the user has the convenience of using the same. Also, optical discs of different types can be used by the present invention. That is, according to the present invention, the product has much improved compatibility.

While the present invention has been shown and described with reference to the preferred embodiment thereof, it will be understood by those skilled in the art that various changes in form and details may be effected therein without departing from the scope of the invention as defined by the appended claims.

Although a few preferred embodiments have been shown and described, it will be appreciated by those skilled in the art that various changes and modifications might be made without departing from the scope of the invention, as defined in the appended claims.

## Claims

1. An apparatus for driving an optical disc employing a caddy (300), wherein the optical disc driving apparatus comprises:
a means for guiding the movement of a base plate (200), on which an optical disc rotation means (211) and an optical device (213) are mounted, to an optical disc loading and chucking position; and
an ejection means;
**characterised in that**:
the means for guiding movement of the base plate (200), guides the base plate while the base plate (200) is moved by physical force exerted to a caddy (300) inserted into a deck base (100); and
the apparatus comprises a means for locking the base plate (200) following movement to the optical disc loading and chucking position by the guiding means.

2. An apparatus as claimed in claim 1, wherein the physical force is manual pressure exerted by a user, the rotation means is a spindle motor (211), and the optical device is a pickup unit (213) having an optical head (213a).

3. An apparatus as claimed in claim 1 or 2, wherein the guiding means comprises:
a pair of opposed slots (105a) respectively defined at the rear portions of both sidewalls (101, 102) of the deck base (100);
a pair of opposed cam grooves (106a) having inclined surfaces of a predetermined degree, formed at the front portions of both sidewalls (101, 102) of the deck base (100);
a pair of first guiding projections (201a, 201b) formed at both rear portions of the base plate (200), and engaged with slots (105a); and
a pair of second guiding projections (202a, 202b) formed at both front portions of the base plate (200), and are engaged with the cam grooves (106a).

4. An apparatus as claimed in claim 1, 2 or 3, wherein the base plate locking means (400) comprises:
a locking formation (410) defined at a side surface of the base plate (200);
a locker (420) having a locking lever (421) to be selectively inserted into the locking formation (410), and pivotally mounted to the deck base (100) by a pin (430); and
a biasing means (440) spring disposed at the pin (430) of the locker (420), to elastically support the locker (420) in a predetermined direction.

5. An apparatus as claimed in claim 1, 2, 3 or 4, wherein the ejection means comprises:
a means for unlocking the base plate (200); and
an elastic means for elastically supporting the base plate (200) to return the base plate (200) to the initial position in response to unlocking the base plate (200) by the unlocking means, and a rear end surface of a caddy (300) being arranged for unlocking by means of a pair of locking projections (204a, 204b) formed at the rear portion of the base plate (200) so that the caddy (300) is withdrawn while the base plate (200) is moved to the initial position.

6. An apparatus as claimed in claim 5, wherein the unlocking means comprises:
an unlocking projection (510) formed at an upper surface of a locking piece (422) which is integrally formed at the locker (420); and
an unlocking lever (520) integrally formed at a pickup unit (213) to be selectively in contact with the unlocking projection (510), to push the unlocking projection (510) in response to the movement of the pickup unit (213) and rotate the locker (420),
and the pickup unit (213) is rapidly moved in a radial direction of an optical disc in an ejection mode.

7. An apparatus as claimed in claim 5 or 6, wherein the elastic means is a pair of springs (210a) respectively disposed between a pair of first spring holding projections (108a) formed at both sides of the deck base (100) and a pair of second spring holding projections (203a, 203b) formed at sides of both sidewalls of the base plate (200).

8. The apparatus for driving an optical disc as claimed in claim 1, wherein:
the caddy (300) is arranged to receive an optical disc;
the base plate (200) is movably mounted to the deck base (100), having a pair of locking projections (204a, 204b) at a rear portion thereof which are, in use, in contact with the rear end surface of the caddy (300);
the optical disc rotation means (211) is mounted to the base plate (200), for rotating the optical disc at a predetermined speed;
the optical device (213) is an optical pickup means (213) movably mounted to the base plate (200), and is movable in a radial direction of the optical disc for recording and/or reproducing an information on/from a recordable track of the optical disc;
the apparatus further comprising:
a means for unlocking the base plate; and
an elastic means for elastically supporting the base plate (200) so as to return the base plate (200) to the initial position in response to unlocking the base plate (200) by the unlocking means.

9. An apparatus as claimed in claim 8, wherein there is provided a guiding slider (600) coupled to a side wall (101) of the deck base (100) for guiding the movement of a caddy (300) when inserted and/or withdrawn into/from the deck base (100), a plate (110) coupled to a lower portion of the deck base (100) a cover coupled (120) to an upper portion of the deck base (100) and a front panel (130) having a caddy entrance (130a) is coupled to a front surface of the cover (120).

10. An apparatus as claimed in claim 9, wherein the guiding slider (600) is movably disposed at a sidewall (101) of the deck base (100) so that the guiding slider (600) is advanced/retracted in a range of a predetermined stroke, and elastic means (620) which is disposed between the guiding slider (620) and the sidewall (101) so as to elastically bias the guiding slider (600) toward its initial position.

11. An apparatus as claimed in claim 8, 9 or 10, wherein the caddy (300) is comprised of a caddy tray (310) and a caddy cover (320) and the caddy tray (310) is slidably coupled with respect to the caddy cover (320), a pair of bosses (312a, 312b) having separation preventing holes are formed at both lower sides of the caddy tray (310), and a pair of corresponding separation preventing projections (216a, 216b) are formed on the base plate (200) to be inserted into the separation preventing holes of the bosses (312a, 312b) when the base plate (200) is moved to the optical disc loading and chucking position, so that the caddy may be prevented from being separated while moved.

12. An apparatus as claimed in any of claims 8 to 11, wherein the means for guiding the movement of the base plate comprises:
a pair of opposed slots (105a) respectively defined at rear portions of both sidewalls (101, 102) of the deck base (100);
a pair of opposed cam grooves (106a) defined at front portions of both sidewalls (101, 102) of the deck base (100) and having inclined surfaces of a predetermined degree;
a pair of first guiding projections (201a, 201b) formed at rear portions of both sides of the base plate (200), engaged with slots (105a); and
a pair of second guiding projections (202a, 202b) formed at front portions of both sides of the base plate (200) and engaged with the cam grooves (106a).

13. An apparatus as claimed in any of claims 8 to 12, wherein the base plate locking means comprises:
a locking formation (410) defined at a side of a base plate (200);
a locker (420) pivotally mounted to the deck base (100) by a pin (430) and having a locking lever (421) to be selectively inserted into the locking formation (410); and
a biasing means (440) disposed at the pin (430) of the locker (410), to elastically support the locker (420) in a predetermined direction.

14. An apparatus as claimed in any of claims 8 to 13, wherein the unlocking means comprises:
a first unlocking projection (510) formed at an upper surface of a locking piece (422) which is integrally formed at the locker (420); and
a first unlocking lever (520) integrally formed at a pickup unit (213) to be selectively in contact with the first unlocking projection (510), and to push the first unlocking projection (510) so as to rotate the locker (420) in response to the movement of the pickup unit (213),
and the pickup unit (213) is rapidly moved in a radial direction of an optical disc in the ejection mode.

15. An apparatus as claimed in any of claims 8 to 14, wherein a pair of springs (210a) are provided respectively disposed between a pair of first spring holding projections (108a) provided to both sides of a base plate (200) and a pair of second spring holding projections (203a, 203b).

16. An apparatus as claimed in any of claims 8 to 15 further comprising an emergency ejection means (630, 640, 650) for forcibly withdrawing a caddy (300) when an optical disc driving apparatus stops operating due to an abnormality, or the like.

17. An apparatus as claimed in claim 16, wherein the emergency ejection means comprises:
a second unlocking projection (650) formed at the other side of the upper surface of the locking piece (422), and spaced from the first unlocking projection (510) at a predetermined distance;
a second unlocking lever (630) extending from a guiding slider (600) to be selectively in contact with the second unlocking projection (650), to push the second unlocking projection (650) and rotate a locker (420) in response to an advancing motion of the guiding slider (600); and
a press member (640) which is bent-formed at an end portion of the guiding slider (600), while being exposed outward through an emergency ejection hole (130b) defined at the front panel (130),
and accordingly, the press member (640) may be pressed from the outside through the emergency ejection hole (130b) so as to advance the guiding slider (600) and unlock the base plate (200).

18. An apparatus as claimed in any of claims 11 to 17, wherein the unlocking means further comprises a caddy holding means for holding the cover (320) of the caddy (300) so as to permit the exclusive withdrawal of the caddy tray (310), and accordingly, the apparatus is characterized as being utilized as a caddy-type as well as a tray-type.

19. An apparatus as claimed in claim 18, wherein the caddy holding means comprises:
a holder (700) movably mounted to a hole defined at the front side of deck base (100), and having a locking protrusion (710) formed at an upper portion thereof and a movement projection (720) formed at a front portion thereof to protrude through a movement hole (130c) defined at the front panel (130); and
at least one locking elevation (322) formed at sides of the back of the caddy cover (320),
and accordingly, the holder (700) is selectively moved so that the locking elevation (322) of the caddy cover is locked with the locking protrusion (710) of the holder (700)and the caddy cover (320) is prevented from being withdrawn out of the deck base (100).

20. The apparatus for driving an optical disc as claimed in claim 1, wherein:
the caddy (300) is arranged for housing or receiving an optical disc;
the base plate (200) is movably mounted to the deck base (100), and having a pair of locking projections (204a, 204b) at a rear portion thereof to be in contact with the back of the caddy (300);
the optical disc rotation means (211) is mounted to the base plate (200), to rotate the optical disc at a predetermined speed; and
the optical device (213) is movably mounted to the base plate (200), moveable in a radial direction of the optical disc which is rotated by an optical disc rotation means (211) so as to record and/or reproduce an information on/from a recordable track of the optical disc;
the apparatus further comprising:
a means for unlocking the base plate (200);
an elastic means for elastically supporting the base plate (200) so as to return the base plate to the initial position in response to unlocking the base plate (200) by the unlocking means; and
an emergency ejection means (630, 640, 650) for forcibly withdrawing the caddy (300) when the optical disc driving apparatus stops operating due to an abnormality, or the like.

21. The apparatus for driving an optical disc as claimed in claim 1, wherein:
the caddy (300) is arranged for housing or receiving an optical disc;
the base plate (200) is movably mounted to the deck base (100), and having a pair of locking projections (204a, 204b) at a rear portion thereof to be in contact with a rear end of the caddy (300);
the optical disc rotation means (211) is mounted to the base plate (200), to rotate the optical disc at a predetermined speed; and
the optical device (213) is movably mounted to the base plate (200), and moveable in a radial direction of the optical disc which is rotated by the optical disc rotation means (211) so as to record and/or reproduce an information on/from a recordable track of the optical disc;
the apparatus further comprising:
a means for unlocking the base plate (200);
an elastic means for elastically supporting the base plate (200) so as to return the base plate to the initial position in response to unlocking the base plate (200) by the unlocking means; and
a caddy holding means for holding a cover (320) of the caddy (300) to permit an exclusive withdrawal of a caddy tray (310) when the optical disc is ejected by the unlocking means.

22. The apparatus for driving an optical disc as claimed in claim 1, wherein:
the caddy (300) is arranged for housing or receiving an optical disc;
the base plate (200) is movably mounted to the deck base (100), and having a pair of locking projections (204a, 204b) at a rear portion thereof to be in contact with a rear end of the caddy (300);
the optical disc rotation means (211) is a spindle motor (211) mounted to the base plate (200), to chuck the optical disc and rotate the optical disc at a predetermined speed; and
the optical device (213) is a pickup unit (213) movably mounted to the base plate (200), and moveable in a radial direction of the optical disc which is rotated by the spindle motor (211), to record and/or reproduce an information on/from a recordable track of the optical disc;
the apparatus further comprising:
an unlocking means for unlocking the base plate (200);
an elastic means for elastically supporting the base plate (200) so as to return the base plate (200) to the initial position in response to unlocking the base plate by the unlocking means;
an emergency ejection means (630, 640, 650) for forcibly withdrawing the caddy (300) when the optical disc driving apparatus stops operating due to an abnormality, or the like; and
a caddy holding means for holding a cover (320) of the caddy (300) so as to permit an exclusive withdrawal of a caddy tray (310) when the optical disc is ejected by the unlocking means.

23. A method for driving an optical disc comprising steps of:
(A) loading an optical disc, wherein a base plate (200) on which a spindle motor (211) and a pickup unit (213) are mounted is moved to an optical disc loading and chucking position;
(C) recording and/or reproducing an information by means of the spindle motor (211) and the pickup unit (213); and
(D) unloading the optical disc;
**characterised by**:
in step (A) the base plate (200) is moved to the optical disc loading and chucking position by physical force exerted to a caddy (300) inserted into a deck base (100) ;
(B) locking the base plate (200) which is moved to the optical disc loading and chucking position;
in step (D) the pickup unit (213) is rapidly moved in a radial direction of the optical disc so as to unlock the base plate (200) and to move the base plate (200) to the initial position.

24. A method as claimed in claim 23 further comprising:
an emergency ejection step (E) of forcibly unlocking the base plate (200) so as to withdraw the caddy (300) when an abnormality occurs during the step (C).

25. A method as claimed in claim 23, further comprising:
a step (F) after the step (D), of holding a cover (320) of the caddy (300) which is withdrawn to permit an exclusive withdrawal of a caddy tray (310) out of the deck base (100).

26. The method for driving an optical disc according to claim 23, comprising steps of:
(E) forcibly unlocking the base plate (200) to withdraw the caddy (300) when an abnormality occurs during the step (C); and
(F) after the step (D), of holding a cover (320) of the caddy (300) which is withdrawn to permit an exclusive withdrawal of a caddy tray (310) out of the deck base (100).

## Patentansprüche

1. Vorrichtung zum Antrieb eines optischen Datenträgers, welche eine Schutzhülle (300) verwendet, wobei die Antriebsvorrichtung für optische Datenträger umfasst:
ein Mittel zur Führung der Bewegung einer Trägerplatte (200), auf welcher ein Drehungsmittel (211) für den optischen Datenträger und eine optische Vorrichtung (213) angebracht sind, zu einer Lade- und Einspannstellung für den optischen Datenträger; und
ein Auswurfmittel;
**dadurch gekennzeichnet,**
**dass** das Mittel zur Führung der Bewegung der Trägerplatte (200) die Trägerplatte führt, während die Trägerplatte (200) durch eine auf eine in einen Laufwerkgrundrahmen (100) eingeführte Schutzhülle (300) ausgeübte physische Kraft bewegt wird; und
**dass** die Vorrichtung ein Mittel zum Sperren der Trägerplatte (200) umfasst, nachdem diese durch das Führungsmittel zu der Lade- und Einspannstellung für den optischen Datenträger bewegt worden ist.

2. Vorrichtung gemäß Anspruch 1, wobei die physische Kraft ein von einem Benutzer ausgeübter manueller Druck ist, das Drehungsmittel ein Spindelmotor (211) ist und die optische Vorrichtung eine Abtasteinheit (213) ist, die einen optischen Kopf (213a) aufweist.

3. Vorrichtung gemäß Anspruch 1 oder 2, wobei das Führungsmittel umfasst:
ein Paar einander gegenüberliegender Nuten (1 05a), die jeweils an den hinteren Bereichen der beiden Seitenwände (101, 102) des Laufwerkgrundrahmens (100) vorgesehen sind;
ein Paar einander gegenüberliegender Kurvennuten (106a) mit zu einem vorherbestimmten Grad geneigten Flächen, die an den vorderen Bereichen der beiden Seitenwände (101, 102) des Laufwerkgrundrahmens (100) ausgebildet sind;
ein Paar erster Führungsnasen (201a, 201b), die an beiden hinteren Bereichen der Trägerplatte (200) ausgebildet sind und die in die Nuten (105a) eingreifen; und
ein Paar zweiter Führungsnasen (202a, 202b), die an beiden vorderen Bereichen der Trägerplatte (200) ausgebildet sind und die in die Kurvennuten (106a) eingreifen.

4. Vorrichtung gemäß Anspruch 1, 2 oder 3, wobei das Trägerplattensperrmittel (400) umfasst:
eine Sperrstruktur (410), die an einer Seitenfläche der Trägerplatte (200) vorgesehen ist;
ein Sperrelement (420) mit einem Sperrhebel (421), der wahlweise in die Sperrstruktur (410) einbringbar ist und am Laufwerkgrundrahmen (100) mittels eines Stifts (430) schwenkbar gelagert ist; und
ein Vorspannmittel (440), das als Federlagerung am Stift (430) des Sperrelements (420) angeordnet ist, um auf das Sperrelement (420) in eine vorherbestimmte Richtung elastisch einzuwirken.

5. Vorrichtung gemäß Anspruch 1, 2, 3 oder 4, wobei das Auswurfmittel umfasst:
ein Mittel zum Entsperren der Trägerplatte (200); und
ein elastisches Mittel zum elastischen Einwirken auf die Trägerplatte (200), um die Trägerplatte (200), als Reaktion auf ein Entsperren der Trägerplatte (200) durch das Entsperrmittel, in die Ausgangsstellung zurückzubringen, und eine hintere Endfläche einer Schutzhülle (300), die zum Entsperren mittels eines Paares von Sperrvorsprüngen (204a, 204b) vorgesehen ist, die am hinteren Bereich der Trägerplatte (200) ausgebildet sind, so dass die Schutzhülle (300) zurückgezogen wird, während die Trägerplatte (200) zur Ausgangsstellung bewegt wird.

6. Vorrichtung gemäß Anspruch 5, wobei das Entsperrmittel umfasst:
eine Entsperrnase (510), die an einer oberen Fläche eines Sperrteils (422) ausgebildet ist, welches insgesamt am Sperrelement (420) ausgebildet ist; und
einen Entsperrhebel (520), der insgesamt an einer Abtasteinheit (213) ausgebildet ist, um wahlweise in Kontakt mit der Entsperrnase (510) zu stehen, um die Entsperrnase (510) in Reaktion auf die Bewegung der Abtasteinheit (213) anzuschieben und das Sperrelement (420) zu schwenken,
und die Abtasteinheit (213) wird in einem Auswurfmodus schnell in einer Radialrichtung eines optischen Datenträgers bewegt.

7. Vorrichtung gemäß Anspruch 5 oder 6, wobei das elastische Mittel von einem Paar Federn (210a) gebildet wird, die jeweils zwischen einem Paar erster Federhaltervorsprünge (108a), die an beiden Seiten des Laufwerkgrundrahmens (100) ausgebildet sind, und einem Paar zweiter Federhaltervorsprünge (203a, 203b) angeordnet sind, die an Seiten der beiden Seitenwände der Trägerplatte (200) ausgebildet sind.

8. Vorrichtung zum Antrieb eines optischen Datenträgers gemäß Anspruch 1, wobei:
die Schutzhülle (300) derart ausgebildet ist, dass sie einen optischen Datenträger aufnehmen kann;
die Trägerplatte (200) beweglich am Laufwerkgrundrahmen (100) gelagert ist und ein Paar Sperrvorsprünge (204a, 204b) an ihrem hinteren Bereich aufweist, welche im Betrieb in Kontakt mit der hinteren Endfläche der Schutzhülle (300) stehen;
das Drehungsmittel (211) für den optischen Datenträger an der Trägerplatte (200) angebracht ist, um den optischen Datenträger mit einer vorherbestimmten Geschwindigkeit zu drehen;
die optische Vorrichtung (213) ein optisches Abtastmittel (213) ist, das beweglich an der Trägerplatte (200) angebracht ist und in einer Radialrichtung des optischen Datenträgers zum Aufzeichnen und/oder zum Wiedergeben einer Information auf/von einer beschreibbaren Spur des optischen Datenträgers bewegbar ist;
die Vorrichtung ferner umfassend:
ein Mittel zum Entsperren der Trägerplatte; und
ein elastisches Mittel zum elastischen Einwirken auf die Trägerplatte (200), um die Trägerplatte (200), als Reaktion auf ein Entsperren der Trägerplatte (200) durch das Entsperrmittel, in die Ausgangsstellung zurückbringen.

9. Vorrichtung gemäß Anspruch 8, wobei eine Schiebeführung (600), die mit einer Seitenwand (101) des Laufwerkgrundrahmens (100) zum Führen der Bewegung einer Schutzhülle (300) beim Einführen und/oder Zurückziehen in den/aus dem Laufwergrundrahmen (100) verbunden ist, eine Platte (110), die mit einem unteren Bereich des Laufwerkgrundrahmens (100) verbunden ist, eine Abdeckung (120), die mit einem oberen Bereich des Laufwerkgrundrahmens (100) verbunden ist, und ein Frontpaneel (130) mit einem Schutzhülleneingang (130a) vorgesehen sind, das mit einer Stirnfläche der Abdeckung (120) verbunden ist.

10. Vorrichtung gemäß Anspruch 9, wobei die Schiebeführung (600) beweglich an einer Seitenwand (101) des Laufwerkgrundrahmens (100) angeordnet ist, so dass die Schiebeführung (600) im Bereich eines vorherbestimmten Hubs vorgeschoben/zurückgezogen wird, und ein elastisches Mittel (620), das zwischen der Schiebeführung (620) und der Seitenwand (101) angeordnet ist, um die Schiebeführung (600) in Richtung ihrer Ausgangsstellung elastisch vorzuspannen.

11. Vorrichtung gemäß Anspruch 8, 9 oder 10, wobei die Schutzhülle (300) aus einem Schutzhüllenschubfach (310) und einer Schutzhüllenabdeckung (320) besteht und das Schutzhüllenschubfach (310) verschieblich mit der Schutzhüllenabdeckung (320) verbunden ist, ein Paar Nocken (312a, 312b) mit Löchern, die zum Verhindern einer Ablösung ausgebildet sind, an beiden unteren Seiten des Schutzhüllenschubfachs (310) ausgebildet sind, und ein Paar miteinander übereinstimmender Nasen (216a, 216b), die zum Verhindern einer Ablösung ausgebildet sind, auf der Trägerplatte (200) ausgebildet sind, welche in die Löcher der Nocken (312a, 312b) einzuführen sind, die zum Verhindern einer Ablösung ausgebildet sind, wenn die Trägerplatte (200) zur Lade- und Einspannstellung für optische Datenträger bewegt wird, so dass die Schutzhülle daran gehindert werden kann, während ihrer Bewegung abgelöst zu werden.

12. Vorrichtung gemäß einem der Ansprüche 8 bis 11, wobei das Mittel zur Führung der Bewegung der Trägerplatte umfasst:
ein Paar einander gegenüberliegender Nuten (105a), die jeweils an hinteren Bereichen der beiden Seitenwände (101, 102) des Laufwerkgrundrahmens (100) vorgesehen sind;
ein Paar einander gegenüberliegender Kurvennuten (106a), die an vorderen Bereichen der beiden Seitenwände (101, 102) des Laufwerkgrundrahmens (100) vorgesehen sind und zu einem vorherbestimmten Grad geneigte Flächen aufweisen;
ein Paar erster Führungsnasen (201a, 201b), die an hinteren Bereichen der beiden Seiten der Trägerplatte (200) ausgebildet sind und die in die Nuten (105a) eingreifen; und
ein Paar zweiter Führungsnasen (202a, 202b), die an vorderen Bereichen der beiden Seiten der Trägerplatte (200) ausgebildet sind und die in die Kurvennuten (106a) eingreifen.

13. Vorrichtung gemäß einem der Ansprüche 8 bis 12, wobei das Trägerplattensperrmittel umfasst:
eine Sperrstruktur (410), die an einer Seite der Trägerplatte (200) vorgesehen ist;
ein Sperrelement (420), das schwenkbar am Laufwerkgrundrahmen (100) mittels eines Stifts (430) gelagert ist und das einen Sperrhebel (421) aufweist, der wahlweise in die Sperrstruktur (410) einbringbar ist; und
ein Vorspannmittel (440), das am Stift (430) des Sperrelements (410) angeordnet ist, um auf das Sperrelement (420) in eine vorherbestimmte Richtung elastisch einzuwirken.

14. Vorrichtung gemäß einem der Ansprüche 8 bis 13, wobei das Entsperrmittel umfasst:
eine erste Entsperrnase (510), die an einer oberen Fläche eines Sperrteils (422) ausgebildet ist, welches insgesamt am Sperrelement (420) ausgebildet ist; und
einen ersten Entsperrhebel (520), der insgesamt an einer Abtasteinheit (213) ausgebildet ist, um wahlweise in Kontakt mit der ersten Entsperrnase (510) zu stehen und um die erste Entsperrnase (510) anzuschieben, um das Sperrelement (420) in Reaktion auf die Bewegung der Abtasteinheit (213) zu schwenken,
und die Abtasteinheit (213) wird in einem Auswurfmodus schnell in einer Radialrichtung eines optischen Datenträgers bewegt.

15. Vorrichtung gemäß einem der Ansprüche 8 bis 14, wobei ein Paar Federn (210a) vorgesehen sind, die jeweils zwischen einem Paar erster Federhaltervorsprünge (108a), die an beiden Seiten einer Trägerplatte (200) vorgesehen sind, und einem Paar zweiter Federhaltervorsprünge (203a, 203b) angeordnet sind.

16. Vorrichtung gemäß einem der Ansprüche 8 bis 15, die ferner ein Notauswurfmittel (630, 640, 650) zum zwangsweisen Zurückziehen einer Schutzhülle (300) umfasst, wenn eine Vorrichtung zum Antrieb eines optischen Datenträgers den Betrieb wegen einer Fehlfunktion oder Ähnlichem einstellt.

17. Vorrichtung gemäß Anspruch 16, wobei das Notauswurfmittel umfasst:
eine zweite Entsperrnase (650), die an der anderen Seite der oberen Fläche des Sperrteils (422) ausgebildet ist und die in einer vorherbestimmten Entfernung beabstandet von der ersten Entsperrnase (510) angeordnet ist;
einen zweiten Entsperrhebel (630), der von einer Schiebeführung (600) vorragt, um wahlweise in Kontakt mit der zweiten Entspermase (650) zu stehen, um die zweite Entsperrnase (650) anzuschieben und um ein Sperrelement (420) als Reaktion auf eine vorschiebene Bewegung der Schiebeführung (600) zu schwenken; und
ein Betätigungselement (640), welches durch Umbiegen an einem Endbereich der Schiebeführung (600) ausgebildet ist und von außen durch ein am Frontpaneel (130) vorgesehenes Notauswurfloch (130b) zugänglich ist,
und folglich kann das Betätigungselement (640) von außen durch das Notauswurfloch (130b) betätigt werden, um die Schiebeführung (600) vorzuschieben und die Trägerplatte (200) zu entsperren.

18. Vorrichtung gemäß einem der Ansprüche 11 bis 17, wobei das Entspemnittel ferner ein Schutzhüllenhaltemittel zum Halten der Abdeckung (320) der Schutzhülle (300) umfasst, um das ausschließliche Zurückziehen des Schutzhüllenschubfachs (310) zu ermöglichen, und folglich zeichnet sich die Vorrichtung dadurch aus, dass sie sowohl als Schutzhüllen-Ausführung als auch als Schubfach-Ausführung benutzbar ist.

19. Vorrichtung gemäß Anspruch 18, wobei das Schutzhüllenhaltemittel umfasst:
einen Halter (700), der beweglich an einem an der Vorderseite des Laufwerkgrundrahmens (100) vorgesehenem Loch gelagert ist und der einen Sperrvorsprung (710), der an einem oberen Bereich des Halters ausgebildet ist, und eine Verschiebungsnase (720) aufweist, welche an einem vorderen Bereich des Halters ausgebildet ist, um durch eine Verschiebungsöffnung (130c) vorzustehen, die am Frontpaneel (130) ausgebildet ist; und
wenigstens eine Sperrerhebung (322), die an Seiten der Rückseite der Schutzhüllenabdeckung (320) ausgebildet ist,
und folglich ist der Halter (700) wahlweise bewegbar, so dass die Sperrerhebung (322) der Schutzhüllenabdeckung durch den Sperrvorsprung (710) des Halters (700) gesperrt ist, und die Schutzhüllenabdeckung (320) wird daran gehindert, aus dem Laufwerkgrundrahmen (100) zurückgezogen zu werden.

20. Vorrichtung zum Antrieb eines optischen Datenträgers gemäß Anspruch 1, wobei:
die Schutzhülle (300) zum Aufnehmen oder zum Empfangen eines optischen Datenträgers vorgesehen ist;
die Trägerplatte (200) beweglich am Laufwerkgrundrahmen (100) gelagert ist und ein Paar Sperrvorsprünge (204a, 204b) an ihrem hinteren Bereich aufweist, die in Kontakt mit der Rückseite der Schutzhülle (300) stehen;
das Drehungsmittel (211) für den optischen Datenträger an der Trägerplatte (200) angebracht ist, um den optischen Datenträger mit einer vorherbestimmten Geschwindigkeit zu drehen; und
die optische Vorrichtung (213) beweglich an der Trägerplatte (200) angebracht ist und in einer Radialrichtung des optischen Datenträgers bewegbar ist, welcher von dem Drehungsmittel (211) für den optischen Datenträger gedreht wird, um eine Information auf/von einer beschreibbaren Spur des optischen Datenträgers aufzuzeichnen und/oder wiederzugeben;
die Vorrichtung ferner umfassend:
ein Mittel zum Entsperren der Trägerplatte (200);
ein elastisches Mittel zum elastischen Einwirken auf die Trägerplatte (200), um die Trägerplatte, als Reaktion auf ein Entsperren der Trägerplatte (200) durch das Entsperrmittel, in die Ausgangsstellung zurückzubringen; und
ein Notauswurfmittel (630, 640, 650) zum zwangsweisen Zurückziehen der Schutzhülle (300), wenn die Vorrichtung zum Antrieb eines optischen Datenträgers den Betrieb wegen einer Fehlfunktion oder Ähnlichem einstellt.

21. Vorrichtung zum Antrieb eines optischen Datenträgers gemäß Anspruch 1, wobei:
die Schutzhülle (300) zum Aufnehmen oder zum Empfangen eines optischen Datenträgers vorgesehen ist;
die Trägerplatte (200) beweglich am Laufwerkgrundrahmen (100) gelagert ist und ein Paar Sperrvorsprünge (204a, 204b) an ihrem hinteren Bereich aufweist, die in Kontakt mit einem hinteren Ende der Schutzhülle (300) stehen;
das Drehungsmittel (211) für den optischen Datenträger an der Trägerplatte (200) angebracht ist, um den optischen Datenträger mit einer vorherbestimmten Geschwindigkeit zu drehen; und
die optische Vorrichtung (213) beweglich an der Trägerplatte (200) angebracht ist und in einer Radialrichtung des optischen Datenträgers bewegbar ist, welcher von dem Drehungsmittel (211) für den optischen Datenträger gedreht wird, um eine Information auf/von einer beschreibbaren Spur des optischen Datenträgers aufzuzeichnen und/oder wiederzugeben;
die Vorrichtung ferner umfassend:
ein Mittel zum Entsperren der Trägerplatte (200);
ein elastisches Mittel zum elastischen Einwirken auf die Trägerplatte (200), um die Trägerplatte, als Reaktion auf ein Entsperren der Trägerplatte (200) durch das Entsperrmittel, in die Ausgangsstellung zurückzubringen; und
ein Schutzhüllenhaltemittel zum Halten einer Abdeckung (320) der Schutzhülle (300), um ein ausschließliches Zurückziehen eines Schutzhüllenschubfachs (310) zu ermöglichen, wenn der optische Datenträger von dem Entsperrmittel ausgeworfen wird.

22. Vorrichtung zum Antrieb eines optischen Datenträgers gemäß Anspruch 1, wobei:
die Schutzhülle (300) zum Aufnehmen oder zum Empfangen eines optischen Datenträgers vorgesehen ist;
die Trägerplatte (200) beweglich am Laufwerkgrundrahmen (100) gelagert ist und ein Paar Sperrvorsprünge (204a, 204b) an ihrem hinteren Bereich aufweist, die in Kontakt mit einem hinteren Ende der Schutzhülle (300) stehen;
das Drehungsmittel (211) für den optischen Datenträger ein Spindelmotor (211) ist, der an der Trägerplatte (200) angebracht ist, um den optischen Datenträger einzuspannen und den optischen Datenträger mit einer vorherbestimmten Geschwindigkeit zu drehen; und
die optische Vorrichtung (213) eine Abtasteinheit (213) ist, die beweglich an der Trägerplatte (200) angebracht ist und in einer Radialrichtung des optischen Datenträgers bewegbar ist, welcher von dem Spindelmotor (211) gedreht wird, um eine Information auf/von einer beschreibbaren Spur des optischen Datenträgers aufzuzeichnen und/oder wiederzugeben;
die Vorrichtung ferner umfassend:
ein Entsperrmittel zum Entsperren der Trägerplatte (200);
ein elastisches Mittel zum elastischen Einwirken auf die Trägerplatte (200), um die Trägerplatte (200), als Reaktion auf ein Entsperren der Trägerplatte durch das Entsperrmittel, in die Ausgangsstellung zurückzubringen;
ein Notauswurfmittel (630, 640, 650) zum zwangsweisen Zurückziehen der Schutzhülle (300), wenn die Vorrichtung zum Antrieb eines optischen Datenträgers den Betrieb wegen einer Fehlfunktion oder Ähnlichem einstellt; und
ein Schutzhüllenhaltemittel zum Halten einer Abdeckung (320) der Schutzhülle (300), um ein ausschließliches Zurückziehen eines Schutzhüllenschubfachs (310) zu ermöglichen, wenn der optische Datenträger von dem Entsperrmittel ausgeworfen wird.

23. Verfahren zum Antrieb eines optischen Datenträgers, umfassend die Schritte:
(A) Laden eines optischen Datenträgers, wobei eine Trägerplatte (200), auf der ein Spindelmotor (211) und eine Abtasteinheit (213) angebracht sind, zu einer Lade- und Einspannstellung für den optischen Datenträger bewegt wird;
(C) Aufzeichnen und/oder Wiedergeben einer Information mittels des Spindelmotors (211) und der Abtasteinheit (213); und
(D) Entladen des optischen Datenträgers;
**gekennzeichnet durch**:
in Schritt (A) wird die Trägerplatte (200) von einer auf eine in einen Laufwerkgrundrahmen (100) eingeführte Schutzhülle (300) ausgeübte physische Kraft in die Lade- und Einspannstellung für den optischen Datenträger bewegt;
(B) Sperren der Trägerplatte (200), welche zu der Lade- und Einspannstellung für den optischen Datenträger bewegt wird;
in Schritt (D) wird die Abtasteinheit (213) schnell in einer Radialrichtung des optischen Datenträgers bewegt, um die Trägerplatte (200) zu entsperren und die Trägerplatte (200) zu der Ausgangsstellung zu bewegen.

24. Verfahren gemäß Anspruch 23, ferner umfassend:
einen Notauswurfschritt (E) zum zwangsweisen Entsperren der Trägerplatte (200), um die Schutzhülle (300) zurückzuziehen, wenn während des Schritts (C) eine Fehlfunktion auftritt.

25. Verfahren gemäß Anspruch 23, ferner umfassend:
einen Schritt (F) nach dem Schritt (D), wobei eine Abdeckung (320) der Schutzhülle (300) gehalten wird, welche zurückgezogen wird, um ein ausschließliches Zurückziehen eines Schutzhüllenschubfachs (310) aus dem Laufwerkgrundrahmen (100) zu ermöglichen.

26. Verfahren zum Antrieb eines optischen Datenträgers gemäß Anspruch 23, umfassend die Schritte:
(E) zwangsweises Entsperren der Trägerplatte (200), um die Schutzhülle (300) zurückzuziehen, wenn während des Schritts (C) eine Fehlfunktion auftritt; und
(F) nach dem Schritt (D), wobei eine Abdeckung (320) der Schutzhülle (300) gehalten wird, welche zurückgezogen wird, um ein ausschließliches Zurückziehen eines Schutzhüllenschubfachs (310) aus dem Laufwerkgrundrahmen (100) zu ermöglichen.

## Revendications

1. Appareil d'entraînement d'un disque optique à l'aide d'un chariot (300), lequel appareil d'entraînement de disque optique comprend:
des moyens pour guider le déplacement d'une plaque de base (200) sur laquelle des moyens de rotation de disque optique (211) et un dispositif optique (213) sont montés, jusqu'à une position de chargement et de blocage de disque optique; et
des moyens d'éjection;
**caractérisé en ce que**:
les moyens pour guider le déplacement de la plaque de base (200) guident la plaque de base (200) pendant qu'elle est déplacée sous l'effet d'une force physique exercée sur un chariot (300) inséré dans une base de platine (100); et
l'appareil comprend des moyens pour verrouiller la plaque de base (200) après son déplacement jusqu'à la position de chargement et de blocage de disque optique par les moyens de guidage.

2. Appareil tel que défini dans la revendication 1, dans lequel la force physique est une pression manuelle exercée par un utilisateur, les moyens de rotation consistant en un moteur broche électrique (211), et le dispositif optique en une unité de lecture (213) équipée d'une tête optique (213a).

3. Appareil tel que défini dans la revendication 1 ou 2, dans lequel les moyens de guidage comprennent:
deux fentes opposées (105a) respectivement définies au niveau des parties arrière des deux parois latérales (101, 102) de la base de platine (100);
deux rainures de cames opposées (106a) comportant des surfaces inclinées suivant un degré prédéterminé, formées au niveau des parties avant des deux parois latérales (101, 102) de la base de platine (100);
deux premières parties saillantes de guidage (201a, 201b) formées au niveau des deux parties arrière de la plaque de base (200) et en prise avec les fentes (105a); et
deux secondes parties saillantes de guidage (202a, 202b) formées au niveau des deux parties avant de la plaque de base (200) et en prise avec les rainures de cames (106a).

4. Appareil tel que défini dans la revendication 1, 2 ou 3, dans lequel les moyens de verrouillage de plaque de base (400) comprennent:
une structure de verrouillage (410) définie au niveau d'une surface latérale de la plaque de base (200);
un organe de verrouillage (420) comportant un levier de verrouillage (421) destiné à être inséré sélectivement dans la structure de verrouillage (410), et monté de manière pivotante sur la base de platine (100) grâce à un axe (430); et
un ressort formant moyen de sollicitation (440) disposé au niveau de l'axe (430) de l'organe de verrouillage (420) pour maintenir élastiquement ce dernier dans une direction prédéterminée.

5. Appareil tel que défini dans la revendication 1, 2, 3, ou 4, dans lequel les moyens d'éjection comprennent:
des moyens pour déverrouiller la plaque de base (200); et
des moyens élastiques pour maintenir élastiquement la plaque de base (200) afin de ramener celle-ci dans la position initiale en réponse à son déverrouillage par les moyens de déverrouillage, une surface d'extrémité arrière d'un chariot (300) étant conçue pour être déverrouillée au moyen de deux parties saillantes de verrouillage (204a, 204b) formées au niveau de la partie arrière de la plaque de base (200) afin que le chariot (300) soit extrait pendant que la plaque de base (200) est ramenée dans la position initiale.

6. Appareil tel que défini dans la revendication 5, dans lequel les moyens de déverrouillage comprennent:
une partie saillante de déverrouillage (510) formée au niveau d'une surface supérieure d'un élément de verrouillage (422) formé solidairement de l'organe de verrouillage (420); et
un levier de déverrouillage (520) formé solidairement d'une unité de lecture (213) pour être sélectivement en contact avec la partie saillante de déverrouillage (510), afin de pousser cette dernière en réponse au déplacement de l'unité de lecture (213) et de faire tourner l'organe de verrouillage (420),
l'unité de lecture (213) étant déplacée rapidement dans une direction radiale d'un disque optique en mode d'éjection.

7. Appareil tel que défini dans la revendication 5 ou 6, dans lequel les moyens élastiques consistent en deux ressorts (210a) respectivement disposés entre deux premières parties saillantes de maintien de ressort (108a) formées de part et d'autre de la base de platine (100) et deux secondes parties saillantes de maintien de ressort (203a, 203b) formées sur les côtés des deux parois latérales de la plaque de base (200).

8. Appareil d'entraînement d'un disque optique, tel que défini dans la revendication 1, dans lequel :
le chariot (300) est conçu pour recevoir un disque optique;
la plaque de base (200) est montée de manière mobile sur la base de platine (100) et comporte, au niveau de sa partie arrière, deux parties saillantes de verrouillage (204a, 204b) qui, en service, sont en contact avec la surface d'extrémité arrière du chariot (300);
les moyens de rotation de disque optique (211) sont montés sur la plaque de base (200) pour faire tourner le disque optique à une vitesse prédéterminée;
le dispositif optique (213) est un moyen de lecture optique (213) monté de manière mobile sur la plaque de base (200), et est mobile dans une direction radiale du disque optique pour enregistrer des informations sur une piste enregistrable du disque optique et/ou pour reproduire des informations à partir de celle-ci;
l'appareil comprenant également:
des moyens pour déverrouiller la plaque de base; et
des moyens élastiques destinés à supporter la plaque de base (200) afin de ramener celle-ci dans la position initiale en réponse à son déverrouillage par les moyens de déverrouillage.

9. Appareil tel que défini dans la revendication 8, dans lequel il est prévu un coulisseau de guidage (600) relié à une paroi latérale (101) de la base de platine (100) pour guider le déplacement d'un chariot (300) lorsque celui-ci est inséré dans la base de platine (100) et/ou extrait de celle-ci, une plaque (110) reliée à une partie inférieure de la base de platine (100), un élément de recouvrement (120) relié à une partie supérieure de la base de platine (100) et un panneau avant (130) comportant une entrée de chariot (130a) et relié à une surface avant de l'élément de recouvrement (120).

10. Appareil tel que défini dans la revendication 9, dans lequel le coulisseau de guidage (600) est disposé de manière mobile au niveau d'une paroi latérale (101) de la base de platine (100) afin d'être avancé/reculé dans la plage d'une course prédéterminée, des moyens élastiques (620) étant disposés entre le coulisseau de guidage (620) et la paroi latérale (101) afin de solliciter élastiquement le coulisseau de guidage (600) en direction de sa position initiale.

11. Appareil tel que défini dans la revendication 8, 9 ou 10, dans lequel le chariot (300) se compose d'un plateau de chariot (310) et d'un couvercle de chariot (320), le plateau de chariot (310) étant monté de manière coulissante par rapport au couvercle de chariot (320), et deux bossettes (312a, 312b) munies de trous empêchant une séparation étant formées au niveau des deux côtés inférieurs du plateau de chariot (310), tandis que deux tétons (216a, 216b) correspondants empêchant une séparation sont formés sur la plaque de base (200) pour être insérés dans les trous empêchant une séparation des bossettes (312a, 312b) lorsque la plaque de base (200) est déplacée jusqu'à la position de chargement et de blocage de disque optique, afin que le chariot ne puisse pas être séparé pendant son déplacement.

12. Appareil tel que défini dans l'une quelconque des revendications 8 à 11, dans lequel les moyens pour guider le déplacement de la plaque de base comprennent:
deux fentes opposées (105a) respectivement définies au niveau de parties arrière des deux parois latérales (101, 102) de la base de platine (100);
deux rainures de cames opposées (106a) définies au niveau de parties avant des deux parois latérales (101, 102) de la base de platine (100) et comportant des surfaces inclinées suivant un degré prédéterminé;
deux premières parties saillantes de guidage (201a, 201b) formées au niveau de parties arrière des deux côtés de la plaque de base (200) et en prise avec les fentes (105a); et
deux secondes parties saillantes de guidage (202a, 202b) formées au niveau de parties avant des deux côtés de la plaque de base (200) et en prise avec les rainures de cames (106a).

13. Appareil tel que défini dans l'une quelconque des revendications 8 à 12, dans lequel les moyens de verrouillage de plaque de base comprennent:
une structure de verrouillage (410) définie d'un côté d'une plaque de base (200);
un organe de verrouillage (420) monté de manière pivotante sur la base de platine (100) grâce à un axe (430) et comportant un levier de verrouillage (421) destiné à être inséré sélectivement dans la structure de verrouillage (410); et
un moyen de sollicitation (440) disposé au niveau de l'axe (430) de l'organe de verrouillage (420) pour maintenir élastiquement ce dernier dans une direction prédéterminée.

14. Appareil tel que défini dans l'une quelconque des revendications 8 à 13, dans lequel les moyens de déverrouillage comprennent:
une première partie saillante de déverrouillage (510) formée au niveau d'une surface supérieure d'un élément de verrouillage (422) formé solidairement de l'organe de verrouillage (420); et
un premier levier de déverrouillage (520) formé solidairement d'une unité de lecture (213) pour être sélectivement en contact avec la partie saillante de déverrouillage (510), et pour pousser cette dernière afin de faire tourner l'organe de verrouillage (420) en réponse au déplacement de l'unité de lecture (213),
l'unité de lecture (213) étant déplacée rapidement dans une direction radiale d'un disque optique en mode d'éjection.

15. Appareil tel que défini dans l'une quelconque des revendications 8 à 14, dans lequel il est prévu deux ressorts (210a) respectivement disposés entre deux premières parties saillantes de maintien de ressort (108a) prévues de part et d'autre d'une plaque de base (200) et deux secondes parties saillantes de maintien de ressort (203a, 203b).

16. Appareil tel que défini dans l'une quelconque des revendications 8 à 15, comprenant également des moyens d'éjection de secours (630, 640, 650) pour extraire de force un chariot (300) lorsqu'un appareil d'entraînement de disque optique s'arrête de fonctionner en raison d'une anomalie ou d'un problème similaire.

17. Appareil tel que défini dans la revendication 16, dans lequel les moyens d'éjection de secours comprennent:
une seconde partie saillante de déverrouillage (650) formée de l'autre côté de la surface supérieure de l'élément de verrouillage (422) et espacée de la première partie saillante de déverrouillage (510) d'une distance prédéterminée;
un second levier de déverrouillage (630) qui s'étend à partir d'un coulisseau de guidage (600) pour être sélectivement en contact avec la seconde partie saillante de déverrouillage (650), afin de pousser cette dernière et de faire tourner l'organe de verrouillage (420) en réponse à un mouvement d'avancée du coulisseau de guidage (600); et
un organe de pression (640) formé en coude au niveau d'une partie d'extrémité du coulisseau de guidage (600) tout en étant exposé à l'extérieur à travers un trou d'éjection de secours (130b) défini au niveau du panneau avant (130),
l'organe de pression (640) pouvant par conséquent être pressé depuis l'extérieur à travers le trou d'éjection de secours (130b) afin de faire avancer le coulisseau de guidage (600) et de déverrouiller la plaque de base (200).

18. Appareil tel que défini dans l'une quelconque des revendications 11 à 17, dans lequel les moyens de déverrouillage comprennent également des moyens de retenue de chariot destinés à retenir le couvercle (320) du chariot (300) afin de permettre l'extraction exclusive du plateau de chariot (310), l'appareil étant par conséquent **caractérisé par** une utilisation en tant qu'appareil du type chariot ainsi que du type plateau.

19. Appareil tel que défini dans la revendication 18, dans lequel les moyens de retenue de chariot comprennent:
un organe de retenue (700) monté de manière mobile dans un trou défini du côté avant de la base de platine (100) et comportant une protubérance de verrouillage (710) formée au niveau de sa partie supérieure et une partie saillante de déplacement (720) formée au niveau de sa partie avant pour faire saillie à travers un trou de déplacement (130c) défini dans le panneau avant (130); et
au moins une partie surélevée de verrouillage (322) formée au niveau de côtés de la partie arrière du couvercle de chariot (320),
l'organe de retenue (700) étant par conséquent déplacé sélectivement afin que la partie surélevée de verrouillage (322) du couvercle de chariot soit verrouillée avec la protubérance de verrouillage (710) de l'organe de retenue (700) et que le couvercle de chariot (320) ne puisse pas être extrait de la base de platine (100).

20. Appareil d'entraînement d'un disque optique, tel que défini dans la revendication 1, dans lequel:
le chariot (300) est conçu pour loger ou recevoir un disque optique;
la plaque de base (200) est montée de manière mobile sur la base de platine (100) et comporte, au niveau de sa partie arrière, deux parties saillantes de verrouillage (204a, 204b) destinées à être en contact avec l'arrière du chariot (300);
les moyens de rotation de disque optique (211) sont montés sur la plaque de base (200) pour faire tourner le disque optique à une vitesse prédéterminée; et
le dispositif optique (213) est monté de manière mobile sur la plaque de base (200) et est apte à être déplacé dans une direction radiale du disque optique qui est entraîné en rotation par les moyens de rotation de disque optique (211) afin d'enregistrer des informations sur une piste enregistrable du disque optique et/ou de reproduire des informations à partir de celle-ci;
l'appareil comprenant également:
des moyens pour déverrouiller la plaque de base (200) ;
des moyens élastiques pour maintenir élastiquement la plaque de base (200) afin de ramener celle-ci dans la position initiale en réponse à son déverrouillage par les moyens de déverrouillage; et
des moyens d'éjection de secours (630, 640, 650) pour extraire de force le chariot (300) lorsque l'appareil d'entraînement de disque optique s'arrête de fonctionner en raison d'une anomalie ou d'un problème similaire.

21. Appareil d'entraînement d'un disque optique, tel que défini dans la revendication 1, dans lequel:
le chariot (300) est conçu pour loger ou recevoir un disque optique;
la plaque de base (200) est montée de manière mobile sur la base de platine (100) et comporte, au niveau de sa partie arrière, deux parties saillantes de verrouillage (204a, 204b) destinées à être en contact avec une extrémité arrière du chariot (300);
les moyens de rotation de disque optique (211) sont montés sur la plaque de base (200) pour faire tourner le disque optique à une vitesse prédéterminée; et
le dispositif optique (213) est monté de manière mobile sur la plaque de base (200) et est apte à être déplacé dans une direction radiale du disque optique qui est entraîné en rotation par les moyens de rotation de disque optique (211) afin d'enregistrer des informations sur une piste enregistrable du disque optique et/ou de reproduire des informations à partir de celle-ci;
l'appareil comprenant également:
des moyens pour déverrouiller la plaque de base (200);
des moyens élastiques pour maintenir élastiquement la plaque de base (200) afin de ramener celle-ci dans la position initiale en réponse à son déverrouillage par les moyens de déverrouillage; et
des moyens de retenue de chariot destinés à retenir un couvercle (320) du chariot (300) afin de permettre l'extraction exclusive d'un plateau de chariot (310) lorsque le disque optique est éjecté par les moyens de déverrouillage.

22. Appareil d'entraînement d'un disque optique, tel que défini dans la revendication 1, dans lequel:
le chariot (300) est conçu pour loger ou recevoir un disque optique;
la plaque de base (200) est montée de manière mobile sur la base de platine (100) et comporte, au niveau de sa partie arrière, deux parties saillantes de verrouillage (204a, 204b) destinées à être en contact avec une extrémité arrière du chariot (300);
les moyens de rotation de disque optique (211) consistent en un moteur broche électrique (211) monté sur la plaque de base (200) pour bloquer le disque optique et le faire tourner à une vitesse prédéterminée; et
le dispositif optique (213) est une unité de lecture (213) montée de manière mobile sur la plaque de base (200) et est apte à être déplacé dans une direction radiale du disque optique qui est entraîné en rotation par le moteur broche électrique afin d'enregistrer des informations sur une piste enregistrable du disque optique et/ou de reproduire des informations à partir de celle-ci;
l'appareil comprenant également:
des moyens de déverrouillage pour déverrouiller la plaque de base (200);
des moyens élastiques pour maintenir élastiquement la plaque de base (200) afin de ramener celle-ci dans la position initiale en réponse à son déverrouillage par les moyens de déverrouillage;
des moyens d'éjection de secours (630, 640, 650) pour extraire de force le chariot (300) lorsque l'appareil d'entraînement de disque optique s'arrête de fonctionner en raison d'une anomalie ou d'un problème similaire; et
des moyens de retenue de chariot destinés à retenir un couvercle (320) du chariot (300) afin de permettre l'extraction exclusive d'un plateau de chariot (310) lorsque le disque optique est éjecté par les moyens de déverrouillage.

23. Procédé d'entraînement d'un disque optique, comprenant les étapes de:
(A) chargement d'un disque optique, une plaque de base (200) sur laquelle un moteur broche électrique (211) et une unité de lecture (213) sont montés étant déplacée jusqu'à une position de chargement et de blocage du disque optique;
(C) enregistrement et/ou reproduction d'informations au moyen du moteur broche électrique (211) et de l'unité de lecture (213); et
(D) déchargement du disque optique;
**caractérisé par**
au cours de l'étape (A), le déplacement de la plaque de base (200) jusqu'à la position de chargement et de blocage du disque optique sous l'effet d'une force physique exercée sur un chariot (300) inséré dans une base de platine (100);
(B) le verrouillage de la plaque de base (200) déplacée jusqu'à la position de chargement et de blocage du disque optique; et
au cours de l'étape (D), le déplacement rapide de l'unité de lecture (213) dans une direction radiale du disque optique afin de déverrouiller la plaque de base (200) et de la ramener dans la position initiale.

24. Procédé tel que défini dans la revendication 23, comprenant également:
une étape d'éjection de secours (E) qui consiste à déverrouiller de force la plaque de base (200) afin d'extraire le chariot (300) lorsqu'une anomalie se produit au cours de l'étape (C).

25. Procédé tel que défini dans la revendication 23, comprenant également:
une étape (F) qui consiste, après l'étape (D), à retenir un couvercle (320) du chariot (300) qui est extrait, pour permettre l'extraction exclusive d'un plateau de chariot (310) hors de la base de platine (100).

26. Procédé d'entraînement d'un disque optique, selon la revendication 23, comprenant les étapes de:
(E) déverrouillage de force de la plaque de base (200) pour extraire le chariot (300) lorsqu'une anomalie se produit au cours de l'étape (C); et
(F) après l'étape (D), retenue du couvercle (320) du chariot (300) qui est extrait pour permettre une extraction exclusive d'un plateau de chariot (310) hors de la base de platine (100).
